# EUROPEAN PATENT APPLICATION

(11) **EP 4 760 469 A1**
(43) Date of publication of application: **17.06.2026**
(21) Application number: 24909783.3
(22) Date of filing: 07.08.2024
(51) Int. Cl.: G06F 3/04817, G06F 3/0486

(54) **SCHEDULE CREATION METHOD AND ELECTRONIC DEVICE**

(30) Priority: 26.12.2023 CN 202311816175; 10.01.2024 CN 202410042554
(71) Applicant: Honor Device Co., Ltd., Shenzhen, Guangdong 518040 (CN)
(72) Inventor: CUI, Xiaolei, Shenzhen, Guangdong 518040 (CN); LIU, Shicong, Shenzhen, Guangdong 518040 (CN); WANG, Lei, Shenzhen, Guangdong 518040 (CN)
(74) Representative: MERH-IP Matias Erny Reichl Hoffmann Patentanwälte PartG mbB
(86) International application number: PCT/CN2024/110258
(87) International publication number: WO 2025/138829

(57) **Abstract**

This application provides a schedule creation method and an electronic device. The method is applied to the electronic device, and includes: detecting a first operation of dragging a first control into a first area on a screen, where the first control corresponds to first data, and the first data includes first schedule information; displaying a first icon of a first application in response to the first operation; detecting a second operation of continuing to drag the first control into a second area in which the first icon is located and releasing the first control; and displaying a first window of the first application in response to the second operation, where the first window includes second schedule information, and the second schedule information corresponds to the first schedule information. The method may be used to resolve technical problems that an operation of an existing schedule creation method is relatively cumbersome, schedule creation efficiency is relatively low, and user experience is relatively poor.

## Description

This application claims priorities to Chinese Patent Application No. 202410042554.1, filed with the China National Intellectual Property Administration on January 10, 2024 and entitled "SCHEDULE CREATION METHOD AND ELECTRONIC DEVICE", and Chinese Patent Application No. 202311816175.5, filed with the China National Intellectual Property Administration on December 26, 2023 and entitled "SCHEDULE CREATION METHOD AND ELECTRONIC DEVICE", which are incorporated herein by reference in their entireties.

### TECHNICAL FIELD

This application relates to the field of electronic technologies, and in particular, to a schedule creation method and an electronic device.

### BACKGROUND

As the pace of people's lives gradually accelerates, various to-do items also gradually increase. A plan or an arrangement for a specific time node or time period is referred to as a schedule, and schedule information is received by an electronic device of a user in a plurality of forms (for example, a text, a picture, or a file) through a plurality of channels (for example, IM (Instant Messenger, instant messenger) software such as SMS message and WeChat, office software, and email).

Currently, after receiving the schedule information, the user usually switches to a schedule management program such as a calendar of the electronic device, and manually inputs the schedule information in the schedule management program to create a schedule corresponding to the schedule information, so that the electronic device can remind the user at a specified target time point.

However, because of complex sources and diverse forms of the schedule information, an operation of the foregoing schedule creation method is relatively cumbersome, schedule creation efficiency is relatively low, and user experience is relatively poor.

### SUMMARY

This application provides a schedule creation method and an electronic device, so as to resolve technical problems that an operation of an existing schedule creation method is relatively cumbersome, schedule creation efficiency is relatively low, and user experience is relatively poor.

According to a first aspect, this application provides a schedule creation method, applied to an electronic device, where the method includes: A first operation of dragging a first control into a first area on a screen is detected, where the first control corresponds to first data, and the first data includes first schedule information; a first icon of the first application is displayed in response to the first operation; a second operation of continuing to drag the first control into a second area in which the first icon is located and releasing the first control is detected; and a first window of the first application is displayed in response to the second operation, where the first window includes second schedule information, and the second schedule information corresponds to the first schedule information.

In this embodiment of this application, after detecting that the user drags the first control into a trigger region (that is, the foregoing first area), the electronic device may trigger a smart transfer service to display at least one application icon (including the foregoing first icon of the first application). After detecting the operation that the user continues to drag the foregoing first control into the second area in which the first icon is located and releases the first control, the electronic device sends to-be-processed data (that is, the first data) corresponding to the foregoing first control to the first application, where the first data includes the first schedule information; and further displays a first window of the first application, where the first window includes the second schedule information, and the second schedule information corresponds to the first schedule information. In the method, the smart transfer service may be triggered to simply and quickly select the to-be-processed data (that is, the first data) for identifying schedule information, and display the second schedule information, so that the user can create a schedule based on the second schedule information. The operation is convenient, thereby improving user experience.

With reference to the first aspect, in a possible implementation, the method further includes: A first interface is displayed, where the first interface includes the first schedule information; a screenshot operation is detected when the first interface is displayed; and the first control in the first interface is displayed in response to the screenshot operation, where the first data is a screenshot image of the first interface.

In this embodiment of this application, the screenshot image may be used as the first data. In the method, schedule information displayed in an interface may be obtained by taking a screenshot. The operation is convenient, thereby improving user experience.

With reference to the first aspect, in a possible implementation, a preview of the screenshot image of the first interface is displayed in the first control.

With reference to the first aspect, in a possible implementation, the method further includes: A second interface of a second application is displayed, where the second interface includes a first area, first text information is displayed in the first area, and the first text information includes the first schedule information; a touch and hold operation on the first area is detected when the second interface is displayed; and the first control is displayed in the first interface in response to the touch and hold operation on the first area, where the first data is the first text information.

In this embodiment of this application, the first text information in the first area may be selected as the first data by performing the touch and hold operation. In the method, the first data may be conveniently selected to create a schedule. The operation is convenient, thereby improving user experience.

In this application, the foregoing touch and hold operation on the first area may alternatively be another user operation on the first area, such as a voice instruction or a tap. This is not limited in this application.

With reference to the first aspect, in a possible implementation, the method further includes: A third interface of a third application is displayed, where the third interface includes a plurality of dialog boxes; a touch and hold operation on the third interface is detected when the third interface is displayed; and the first control is displayed in the third interface in response to the touch and hold operation on the third interface, where the first data is content of the plurality of dialog boxes.

In this embodiment of this application, a method for identifying a screen through pressing may be used to identify a text (for example, the foregoing plurality of dialog boxes) in an entire interface. A schedule is created based on the identified text. In the method, the text in the entire interface may be conveniently selected to create the schedule, thereby simplifying a creation step.

In this application, the foregoing touch and hold operation on the third interface may alternatively be another user operation on the third interface, such as a voice instruction or a tap. This is not limited in this application.

With reference to the first aspect, in a possible implementation, the method further includes: A fourth interface of a gallery application is displayed, where the fourth interface includes a first image; a touch and hold operation on the first image is detected when the fourth interface is displayed; and the first control is displayed in the fourth interface in response to the touch and hold operation on the first image, where the first data is the first image.

In this embodiment of this application, the user may select an image (for example, the first image) in a local storage (for example, the gallery application) through touching and holding. Correspondingly, the electronic device may identify the image selected by the user, and create a schedule based on the image. In the method, image data of the gallery application may be imported into the first application (for example, a system calendar) by performing a simple user operation, to create a schedule. In the method, the user operation is greatly reduced, thereby improving user experience.

In this application, the foregoing touch and hold operation on the first image may alternatively be another user operation on the first image, such as a voice instruction or a tap. This is not limited in this application.

With reference to the first aspect, in a possible implementation, the first schedule information and the second schedule information correspond to a same schedule.

Optionally, the second schedule information may be obtained based on the first schedule information.

Optionally, the first schedule information and the second schedule information may be the same, or may be different.

Optionally, a schedule may be a plan or an arrangement for a specific time node or time period.

With reference to the first aspect, in a possible implementation, the first window further includes a second control, and the method further includes: A fifth interface of the first application is displayed in response to a user operation on the second control, where the fifth interface includes thumbnail information of a first schedule, and the first schedule is created by the first application based on the first schedule information.

With reference to the first aspect, in a possible implementation, the first schedule information includes schedule information of a second schedule and schedule information of a third schedule; and the first window includes a second area and a third area, the second area includes the schedule information of the second schedule, and the third area includes the schedule information of the third schedule.

Optionally, schedule information in the first schedule information and schedule information in the first window may be different, or may be different. This is not limited in this application.

In this embodiment of this application, when the to-be-processed data (that is, the first data) includes schedule information of a plurality of schedules, the electronic device may identify the schedule information of the plurality of schedules in the to-be-processed data, and further display the schedule information of the plurality of schedules, for example, display the plurality of pieces of identified schedule information in the first window, such as the schedule information of the second schedule and the schedule information of the third schedule. In the method, a plurality of schedules can be quickly created without requiring the user to perform the creation operation for a plurality of times, thereby shortening a creation time and improving user experience.

With reference to the first aspect, in a possible implementation, the second area is in a selected state, and the first window further includes the second control. The method further includes: A sixth interface of the first application is displayed in response to a user operation on the second control, where the sixth interface includes thumbnail information of the second schedule.

In this embodiment of this application, any schedule information may be selected from the displayed information of the plurality of schedules to create a schedule. In the method, a personalized requirement of the user may be met, thereby improving user experience.

With reference to the first aspect, in a possible implementation, the second area is in the selected state, and the first window further includes the second control. The method further includes: The third area is displayed in a selected state in response to a user operation on the third area; and a seventh interface of the first application is displayed in response to a user operation on the second control, where the seventh interface includes thumbnail information of the second schedule and thumbnail information of the third schedule.

In the method, a plurality of schedules can be quickly created without requiring the user to perform the creation operation for a plurality of times, thereby shortening a creation time and improving user experience.

With reference to the first aspect, in a possible implementation, the first data includes first location information, the first window includes second location information, and the first location information is different from the second location information.

In this embodiment of this application, after identifying a location from the to-be-processed data (that is, the first data), the electronic device may obtain a recommended location (that is, the second location information) based on the identified location (that is, the first location information) and related address information of the user; and display the recommended location. In the method, intelligent recommendation of a location may be implemented without requiring the user to personally supplement schedule information, thereby simplifying a schedule creation time and improving user experience.

With reference to the first aspect, in a possible implementation, the first data is the first image; and the method further includes: The first image and a share control are displayed; the first icon is displayed in response to a user operation on the share control; and the first window is displayed in response to a user operation on the first icon.

In this embodiment of this application, an icon (for example, the first icon) for schedule creation is added to a sharing function, to support importing of image data (for example, the first image) of another application (for example, the gallery application) into an application (for example, the first application) that creates a schedule, to create a schedule. In the method, the user operation is greatly reduced, thereby improving user experience.

With reference to the first aspect, in a possible implementation, the method further includes: An eighth interface of a fourth application is displayed, where the eighth interface includes the first schedule information; a third control is displayed in response to a user operation performed on the eighth interface when the eighth interface is displayed; and the first window is displayed in response to a user operation on the third control.

In this embodiment of this application, a text (for example, the eighth interface) in an entire interface may be identified. A schedule is created based on the identified text. In the method, the text in the entire interface may be conveniently selected to create the schedule, thereby simplifying a creation step.

With reference to the first aspect, in a possible implementation, the first schedule information includes at least one of a theme, a time, and a location of a schedule.

According to a second aspect, this application provides a schedule creation method, applied to an electronic device, where the method includes: A first interface of a first application is displayed, where the first interface includes calendar information and a first control; a second interface of the first application is displayed in response to a user operation performed on the first control, where the second interface includes a first input bar and a second control, and the first input bar is in a blank state; a third interface of a second application is displayed in response to a user operation performed on the second control, where the third interface includes a first preview corresponding to a first image, and the first image includes first schedule information; and a fourth interface of the first application is displayed in response to an operation on the first preview, where the fourth interface includes the first input bar, the first input bar includes second schedule information, and the second schedule information corresponds to the first schedule information.

In this embodiment of this application, an import control (that is, the second control) is added to a schedule creation interface (that is, the second interface of the first application). The user may select an image (for example, the first image) in a local storage (for example, the second application) by using the import control. Correspondingly, the electronic device may identify the image selected by the user, and display identified schedule information (for example, the foregoing second schedule information), so that the user can create a schedule based on the identified schedule information. In the method, image data of the second application (for example, a gallery application) may be imported into the first application (for example, a system calendar) by performing a simple user operation, to create a schedule. In the method, the user operation is greatly reduced, thereby improving user experience.

With reference to the second aspect, in a possible implementation, the first schedule information and the second schedule information correspond to a same schedule.

Optionally, the second schedule information may be obtained based on the first schedule information.

Optionally, the first schedule information and the second schedule information may be the same, or may be different.

Optionally, a schedule may be a plan or an arrangement for a specific time node or time period.

With reference to the second aspect, in a possible implementation, the first schedule information is schedule information corresponding to a first schedule, the fourth interface further includes the second control, and the method further includes: A fifth interface of the first application is displayed in response to a user operation on the second control, where the fifth interface includes thumbnail information of the first schedule.

With reference to the second aspect, in a possible implementation, the first schedule information includes schedule information of a second schedule and schedule information of a third schedule; and the first window includes a second area and a third area, the second area includes the schedule information of the second schedule, and the third area includes the schedule information of the third schedule.

With reference to the second aspect, in a possible implementation, the second area is in a selected state, the first window further includes the second control, and the method further includes: A sixth interface of the first application is displayed in response to the user operation on the second control, where the sixth interface includes thumbnail information of the second schedule.

With reference to the second aspect, in a possible implementation, the second area is in a selected state, and the first window further includes the second control. The method further includes: The third area is displayed in a selected state in response to a user operation on the third area; and a seventh interface of the first application is displayed in response to the user operation on the second control, where the seventh interface includes thumbnail information of the first schedule and thumbnail information of the second schedule.

With reference to the second aspect, in a possible implementation, the first schedule information includes at least one of a theme, a time, and a location of a schedule.

According to a third aspect, this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method according to any one of the first aspect and the possible implementations of the first aspect.

According to a fourth aspect, an embodiment of this application provides a chip system, and the chip system is applied to an electronic device. The chip system includes one or more processors, and the processor is configured to invoke computer instructions to enable the electronic device to perform the method according to any one of the first aspect and the possible implementations of the first aspect.

According to a fifth aspect, this application provides a computer-readable storage medium, including instructions. When the instructions are run on an electronic device, the electronic device is enabled to perform the method according to any one of the first aspect and the possible implementations of the first aspect.

According to a sixth aspect, this application provides a computer program product including instructions. When the computer program product runs on an electronic device, the electronic device is enabled to perform the method according to any one of the first aspect and the possible implementations of the first aspect.

It may be understood that, the electronic device provided in the third aspect, the chip system provided in the fourth aspect, the computer storage medium provided in the fifth aspect, and the computer program product provided in the fifth aspect are all configured to perform the method provided in this application. Therefore, for beneficial effects that can be achieved by the electronic device, the chip system, the computer storage medium, and the computer program product, refer to the beneficial effects in the corresponding method. Details are not described herein again.

### BRIEF DESCRIPTION OF DRAWINGS

FIG. 1A to FIG. 1M are examples of related user interfaces of a system calendar according to an embodiment of this application;
FIG. 2A to FIG. 2F are examples of related user interfaces of triggering creation of a schedule by sharing a screenshot according to an embodiment of this application;
FIG. 3A to FIG. 3E are examples of related user interfaces of a chat application according to an embodiment of this application;
FIG. 4A to FIG. 4B are examples of related user interfaces of a chat application according to an embodiment of this application;
FIG. 5A to FIG. 5G are examples of related user interfaces of a "multi-schedule identification" function of an electronic device according to an embodiment of this application;
FIG. 6A to FIG. 6D are examples of related user interfaces of a "context inference" function of an electronic device according to an embodiment of this application;
FIG. 7A to FIG. 7G are examples of related user interfaces of a "location recommendation" function of an electronic device according to an embodiment of this application;
FIG. 8 is a schematic diagram of a hardware structure of an electronic device according to an embodiment of this application; and
FIG. 9 is a schematic diagram of a software architecture of an electronic device according to an embodiment of this application.

### DESCRIPTION OF EMBODIMENTS

Terms used in the following embodiments of this application are merely intended to describe specific embodiments, but not intended to limit this application. As used in this specification and the appended claims of this application, singular expressions "one", "a/an", "the", "foregoing", and "this" are intended to include plural expressions, unless otherwise clearly specified in the context. It should be further understood that the term "and/or" used in this application indicates and includes any or all possible combinations of one or more listed items.

Currently, many applications in an electronic device have a function of creating a schedule. A system calendar is used as an example. A user may tap an icon of the system calendar on a home screen to enter a calendar interface, and select a target date in the calendar interface. Then, the user may manually create a schedule corresponding to the target date in the system calendar.

In the foregoing method, the user needs to manually input schedule information of a date item by item in an application interface of the system calendar to create a schedule. An operation is relatively cumbersome, and consequently, schedule creation efficiency is relatively low, and user experience is relatively poor.

In view of this, this application provides a schedule creation method, so as to improve efficiency of creating a schedule and improve user experience.

In this embodiment of this application, the user may transmit to-be-processed data (for example, an image or text information) to a target application (for example, the system calendar) in a manner of image importing, screenshot sharing, smart transfer, screen identification through pressing, and the like. Correspondingly, the electronic device may identify schedule information based on the to-be-processed data in response to the user operation. Then, the electronic device may display the identified schedule information. The user may modify the displayed schedule information and instruct to create a schedule based on the displayed schedule information, and perform a similar operation. In the method, the user does not need to manually input the schedule information item by item. The user operation is reduced, thereby improving user experience.

In this embodiment of this application, the electronic device may further perform multi-schedule identification, context inference, and location recommendation on the to-be-processed data when identifying the schedule information in the to-be-processed data, thereby optimizing the identified schedule information.

The following describes a schedule creation method with reference to a user interface (user interface, UI) implemented on an electronic device according to an embodiment of this application.

It should be noted that in this application, a user operation may be a touch operation (for example, a tap operation, a touch and hold operation, an upward sliding operation, a downward sliding operation, or a sideward sliding operation) of the user, may be a contactless operation (for example, an air gesture or a mouse operation), or may be a voice instruction of the user. This is not specifically limited in this embodiment of this application. For ease of description, in the following embodiments, the touch operation of the user is used as an example for description.

First, four implementations in which a user instructs to create a schedule are described.

First implementation: Create a schedule by importing an image.

In this embodiment of this application, the electronic device may display a user interface for creating a schedule, where the user interface may include an import control, and the import control is used to obtain an image to create a schedule; display an image in a local storage in response to the user operation when detecting a user operation on the import control; and then in response to a user operation in which the user selects an image from the displayed image, create a schedule based on the selected image.

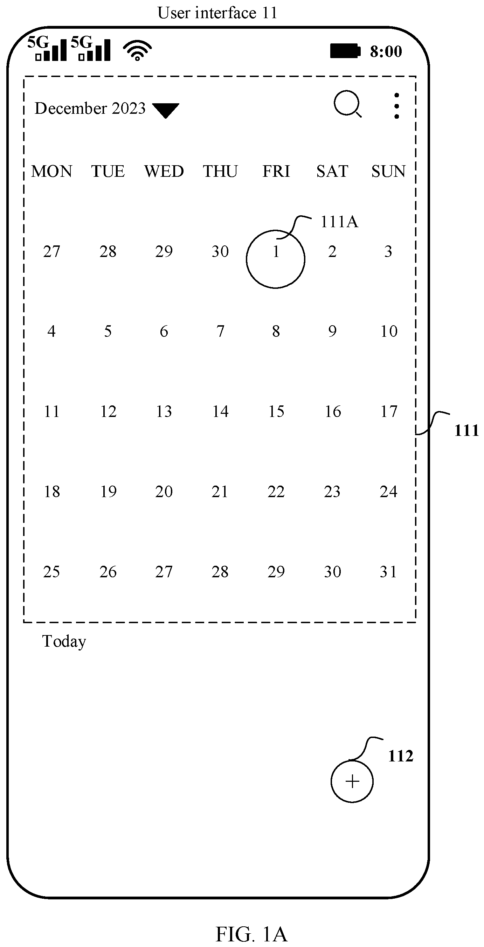

With reference to FIG. 1A to FIG. 1H, the following describes a schedule creation method by using a system calendar in an electronic device as an example. It may be understood that, the schedule creation method in this embodiment of this application is also applicable to a schedule setting function provided in another application or service.

FIG. 1A shows an example of a calendar interface of a system calendar according to an embodiment of this application. As shown in FIG. 1A, a user interface 11 includes calendar information 111 and a create control 112, where the calendar information 111 includes a year, a month, a control that selects a displayed month, and the like. This is not limited in this application. The create control 112 is used to create a schedule. FIG. 1A shows an example in which a current date is December 1, 2023, and an example in which a circle indicates that the current date is in a selected state. The user may alternatively select another date to create a schedule corresponding to the another date. It should be understood that the calendar information 111 may further include lunar calendar information of each date and other content. This is not limited in this application.

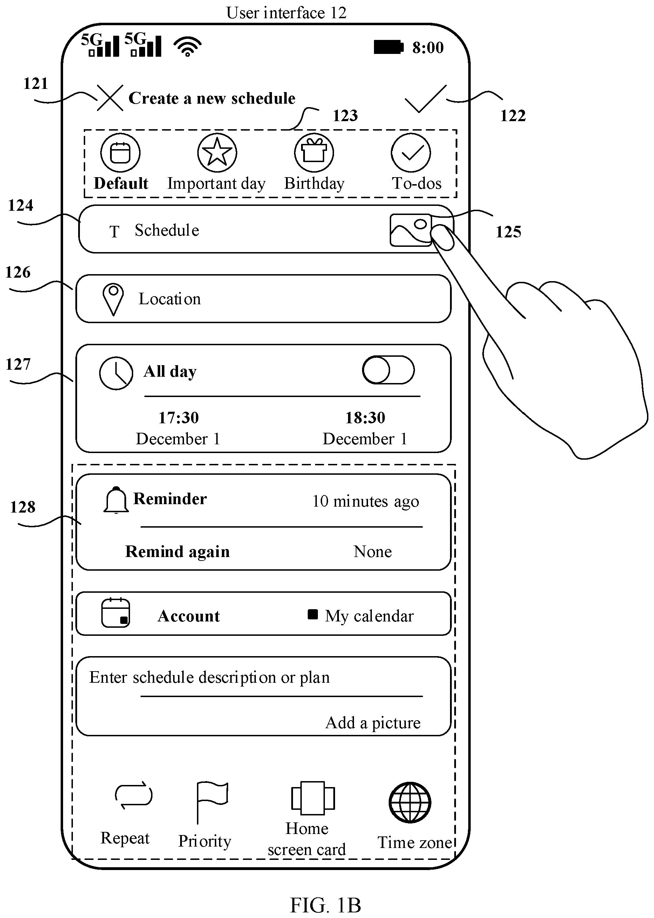

In some embodiments, when detecting a user operation on the create control 112, the electronic device may display a schedule creation interface in response to the user operation. Referring to FIG. 1B, a user interface 12 shown in FIG. 1B is an example of a schedule creation interface according to an embodiment of this application.

The user interface 12 may include an exit control 121, a create control 122, a schedule attribute bar 123, a schedule theme bar 124, an import control 125, a location bar 126, a date bar 127, and another schedule setting bar 128. The exit control 121 is used to exit from creating a schedule. The create control 122 is used to create a schedule based on content of a current interface. The schedule attribute bar 123 is used for an attribute of a currently created schedule, where the attribute may include a default, an important day, a birthday, and a to-do. The schedule theme bar 124 is used to input a schedule theme. The import control 125 is used to select an image. The location bar 126 is used to input a location. The date bar 127 is a date selected from the user interface 11, and a time period may be a time period preset by the system. The user may modify a time in the date bar 127. The another schedule setting bar 128 includes content such as a remind control. This is not limited in this application. In this application, the system calendar may also be referred to as the first application, the user interface 11 may also be referred to as the first interface of the first application, and the create control 112 may also be referred to as the first control. The user interface 12 may be referred to as the second interface of the first application. At least one of the schedule attribute bar 123, the schedule theme bar 124, the location bar 126, the date bar 127, and the another schedule setting bar 128 may be referred to as a first input bar. The import control 125 may also be referred to as the second control.

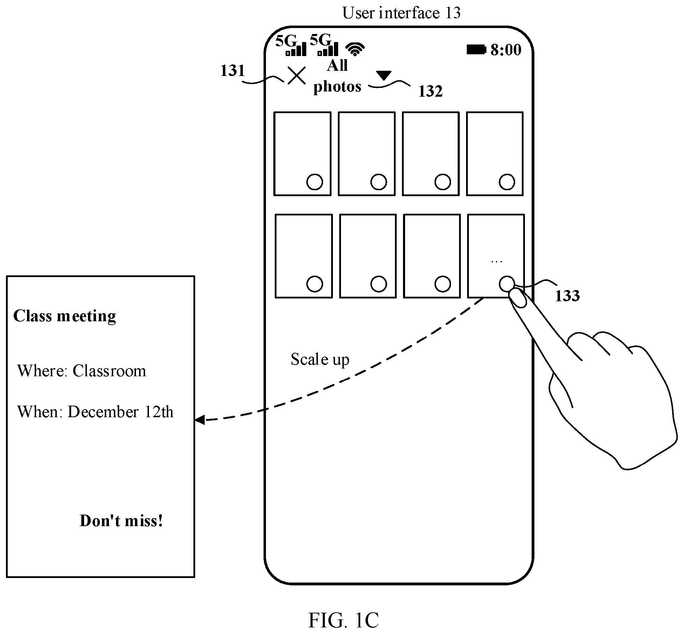

As shown in FIG. 1B, when detecting a user operation on the import control 125, the electronic device may display a user interface 13 shown in FIG. 1C in response to the user operation. The user interface 13 may include an exit control 131, an album selection control 132, a preview of an image in a specific album in a local storage, and a select control corresponding to each image (for example, a select control 133 corresponding to the first image). In this case, the select control corresponding to each image (including the select control 133 corresponding to the first image) is in an unselected state. In this application, the user interface 13 may be referred to as a third interface of a second application (for example, a gallery application), and the third interface includes a first preview corresponding to the first image.

The exit control 131 is used to exit a current interface. The album selection control 132 is used to select an album from the local storage to display a preview of an image in the selected album in a current interface. It should be understood that, to avoid an unclear text shown in the image due to a relatively small preview picture, image content in the preview is indicated by "..." to show actual content of the image. FIG. 1C shows an example of the first image after the preview is enlarged.

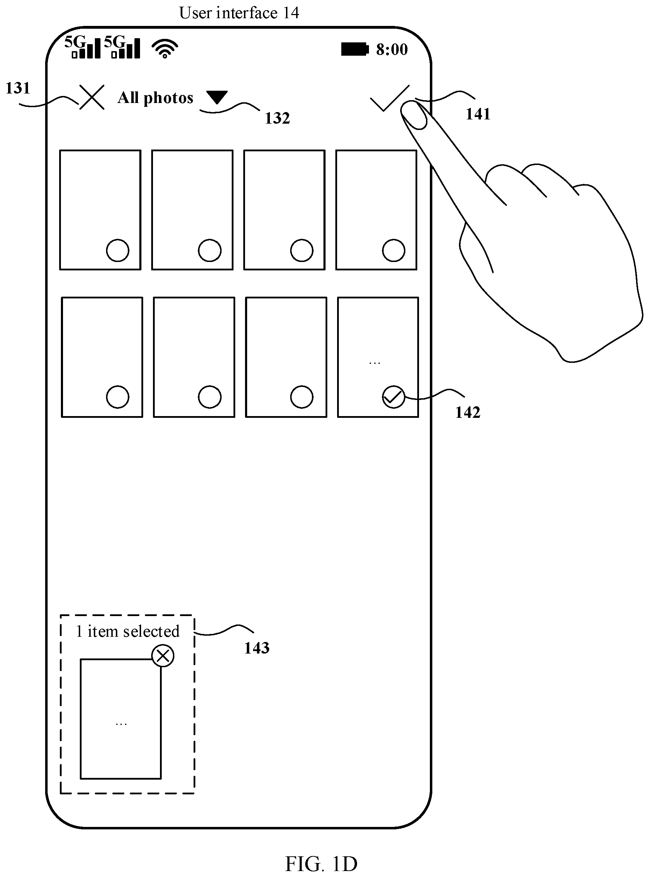

As shown in FIG. 1C, when detecting a user operation on the select control 133 corresponding to the first image, the electronic device may display a user interface 14 shown in FIG. 1D in response to the user operation. The user interface 14 may include an exit control 131, an album selection control 132, a confirm control 141, a preview of an image in a specific album in the local storage, a select control corresponding to each image (for example, a select control 142 corresponding to the first image), and a selected preview area 143. The select control 142 corresponding to the first image is in a selected state, and another image except the first image is in an unselected state. The selected preview area 143 is used to display the preview of the selected image.

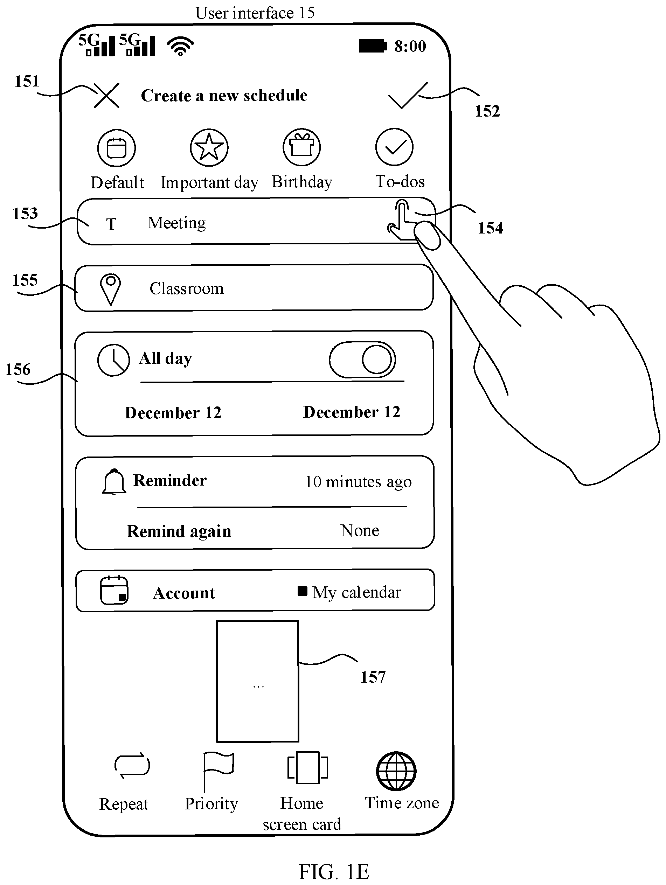

As shown in FIG. 1D, when detecting a user operation on the confirm control 141, the electronic device may identify schedule information in the first image in response to the user operation, and display the identified schedule information in a schedule creation interface. For example, the electronic device may display a user interface 15 shown in FIG. 1E.

The user interface 15 may include an exit control 151, a create control 152, a schedule theme bar 153, a smear control 154, a location bar 155, a time bar 156, and a preview 157 of the first image. The exit control 151 is used to exit from creating a schedule. The create control 152 is used to create a schedule based on content of a current interface. The schedule theme bar 153 includes identifying theme information "meeting" from the first image. The smear control 154 is used to select the theme information from identified text information. The location bar 155 includes identifying location information "classroom" from the first image. The time bar 156 includes identifying time information "December 12" from the first image. The user interface 15 further shows an example of another option for schedule setting, such as the schedule attribute bar and a reminder. This is not limited in this application. In this application, the user interface 15 may be referred to as a fourth interface of the first application (for example, the system calendar), at least one of the schedule theme bar 153, the location bar 155, the time bar 156, and another schedule setting bar in the user interface 15 may be referred to as a first input bar, schedule information in the first image may be referred to as the first schedule information, and schedule information (for example, a meeting and a classroom) displayed in the user interface 15 may be referred to as the second schedule information.

In some embodiments, if the user is satisfied with the currently identified schedule information, the user may touch the create control 152. Correspondingly, the electronic device may create a schedule in response to the user operation.

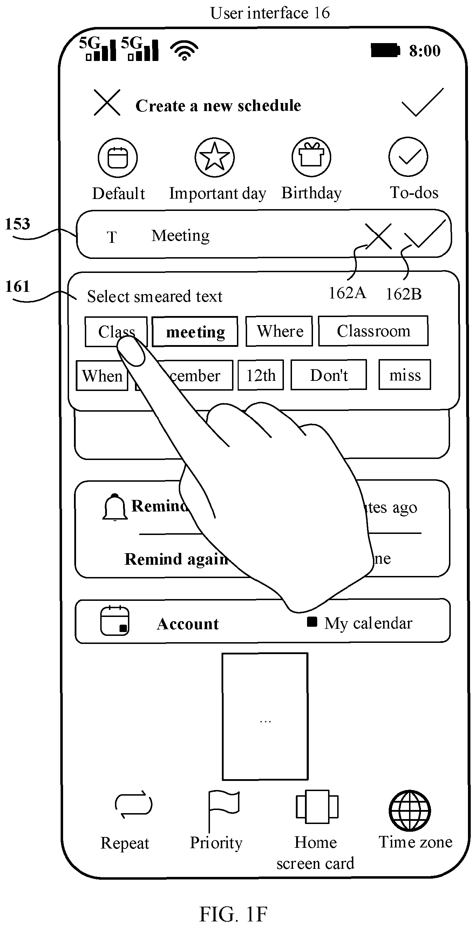

In some other embodiments of this application, the user may modify the theme information by using the smear control 154. As shown in FIG. 1E, when detecting a user operation on the smear control 154, the electronic device may display a user interface 16 shown in FIG. 1F in response to the user operation. The user interface 16 may display a smear area 161 in the original interface, the smear area 161 may display a text identified from the first image, and the user may reselect a theme from the displayed text. FIG. 1F shows an example of a delete control 162A and a confirm control 162B in the schedule theme bar 153. The delete control 162A is used to delete a text in the schedule theme bar 153, and the confirm control 162B is used to confirm completion of smearing and cancel display of the smear area 161. For example, the user may select a text in the smear area 161, and then tap the confirm control 162B. In response to the user operation, the electronic device may display, in the schedule theme bar 153, the text selected by the user, and then cancel display of the smear area 161. The schedule theme bar 153 no longer displays the delete control 162A and the confirm control 162B, but displays the smear control 154. Then, the user may alternatively continue to tap the smear control 154 to edit the text in the schedule theme bar 153.

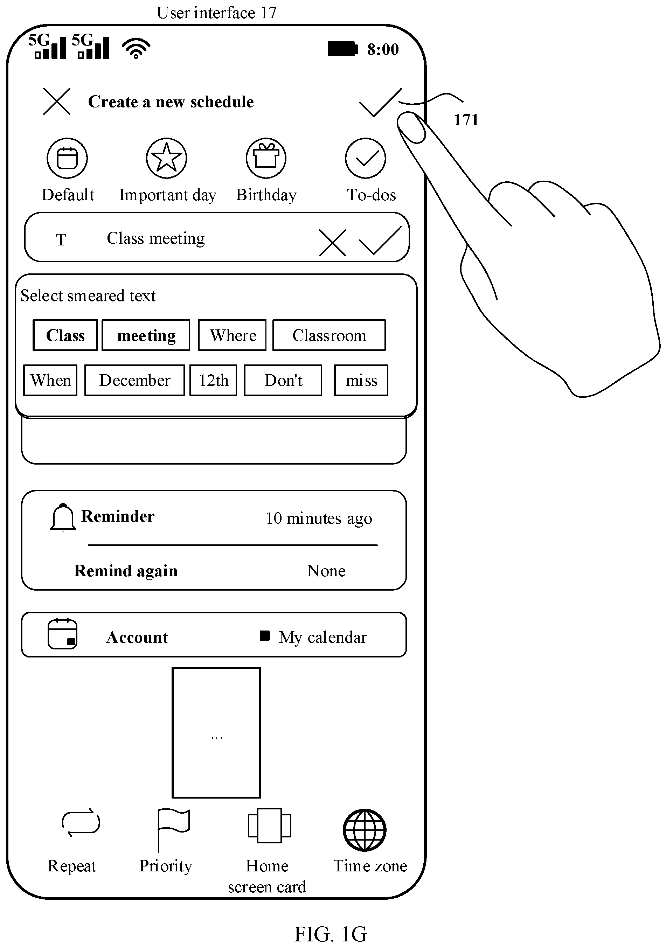

For ease of illustration, in the smear areas in FIG. 1F and FIG. 1G, a bold frame and a bold text are used to illustrate that the text is selected. The electronic device may alternatively highlight the selected text in another manner, for example, in a manner of filling the selected text with a color. This is not limited in this application.

FIG. 1G shows an example of a user interface 17 after a user modifies theme information by using a smear control 154. The user interface 17 includes a create control 171. The create control 171 is used to create a schedule based on content of a current interface. It should be understood that the user may repeatedly select a text and unselect a text in the smear area 161, and edit the selected text by using the foregoing delete control 162A and confirm control 163B. This is not limited in this application.

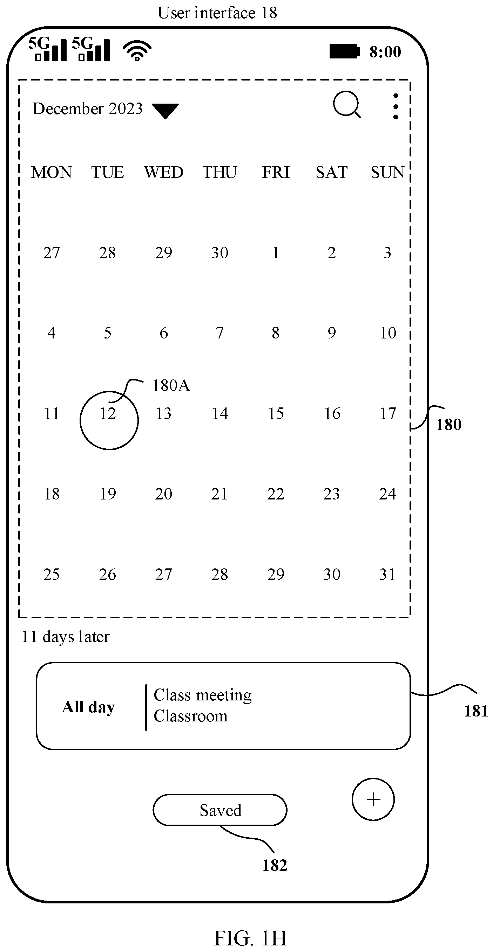

Then, as shown in FIG. 1G, when detecting a user operation on the create control 171, the electronic device may create a schedule in response to the user operation. Then, a user interface 18 shown in FIG. 1H may be displayed.

The user interface 18 may include calendar information 180, schedule information 181, and a notification window 182. The calendar information 180 includes a date 180A in a selected state, and the date in the selected state is a schedule time identified from the first image. The schedule information 181 is used to display thumbnail information of a schedule that is created based on schedule information in the user interface 17, for example, a reminder time is "all day", a theme is "classmeeting", and a location is "classroom". The notification window 182 is used to remind the user that the created schedule has been saved. Optionally, display of the notification window 182 may be cancelled after the notification window is displayed for preset duration.

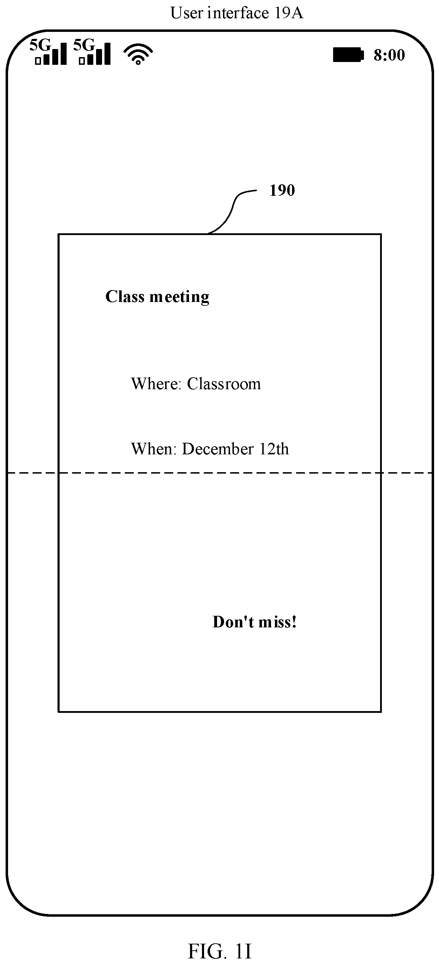

In some other embodiments of this application, when detecting a user operation on the confirm control 141 shown in FIG. 1D, the electronic device may identify schedule information in the first image in response to the user operation. In a process of identifying the schedule information of the first image, a motion for scanning the first image may be displayed. The user interface may be a user interface 19A shown in FIG. 1I, in which a first image 190 is shown as an example. It should be understood that, in the foregoing embodiments shown in FIG. 1A to FIG. 1H, a scanning motion for the first image shown in the user interface 19A shown in FIG. 1I may alternatively be displayed between FIG. 1D and FIG. 1E.

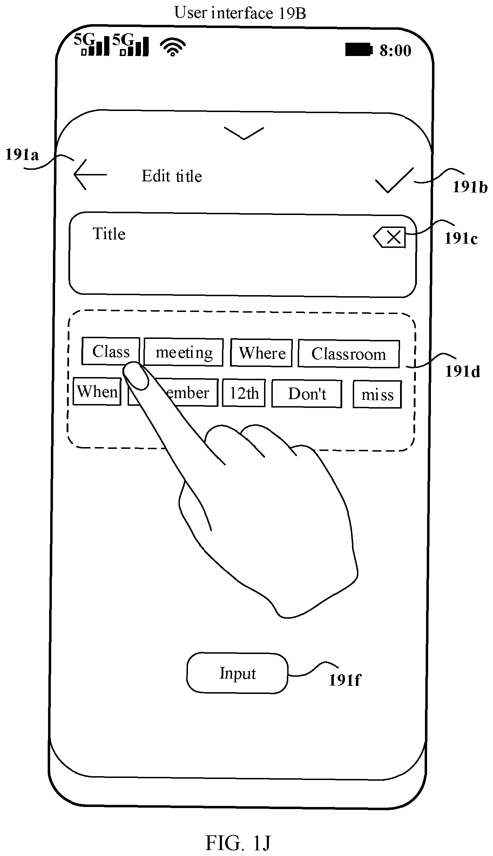

Then, the electronic device may display a user interface 19B shown in FIG. 1J after the identification ends.

As shown in FIG. 1J, the user interface 19B is an example of a theme editing interface provided in an embodiment of this application. The interface includes a return control 191a, a confirm control 191b, a delete control 191c of a theme input box, a smear area 191d, and an input control 191f. The return control 191a is used to return to a previous interface (the interface shown in FIG. 1D), the confirm control 191b is used to determine the theme, the delete control 191c is used to delete a text in the theme input box, the smear area 191d is used to display a text identified from the first image, and the input control 191f is used to input a text selected by the user into the theme input box.

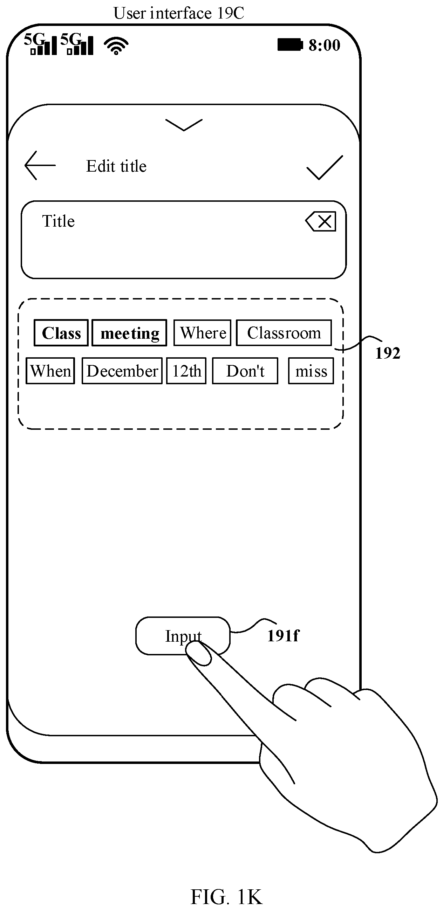

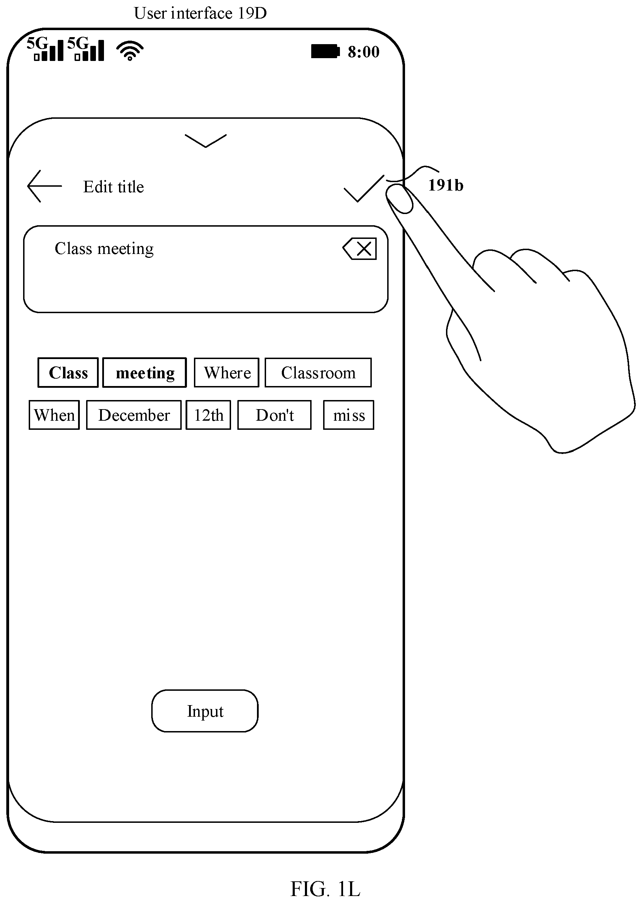

As shown in FIG. 1J, when detecting a user operation on the smear area 191d, the electronic device may display a user interface 19C shown in FIG. 1K in response to the user operation. The user interface 19C shows an example of a text selected in a smear area 192, that is, "classmeeting". Then, when detecting a user operation on the input control 191f, the electronic device may display the selected text in the theme input bar in response to the user operation, for example, display a user interface 19D shown in FIG. 1L.

It should be understood that, after the electronic device displays the selected text in the theme input bar, for example, displays the user interface 19D shown in FIG. 1L, the user may further edit the text displayed in the theme input bar, for example, tap the delete control 191c in the theme input box to delete the text in the theme input bar, or touch the text in the smear area 192 to add the text again. This is not limited in this application.

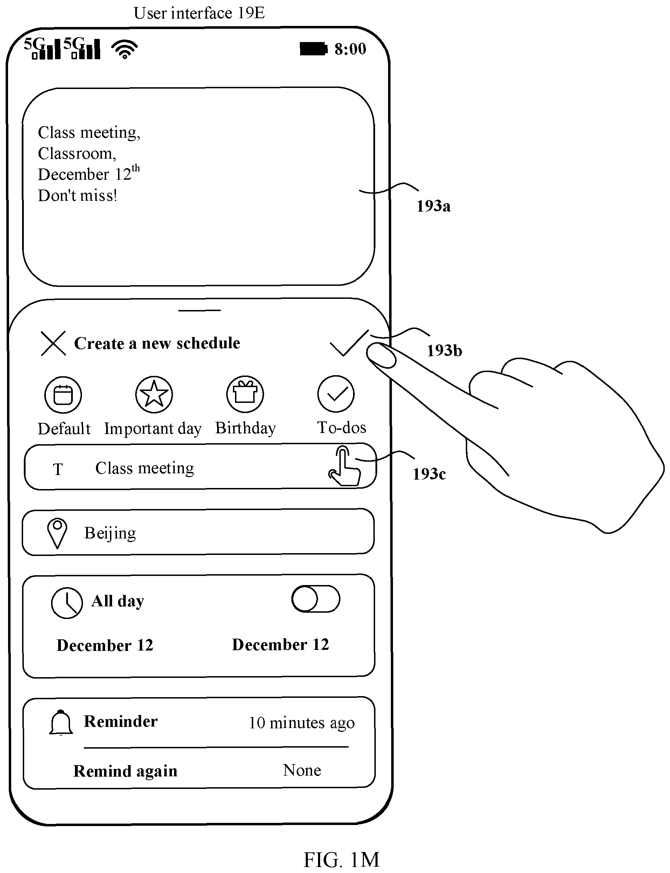

As shown in FIG. 1L, when detecting a user operation on the confirm control 191b, the electronic device may display a user interface 19E shown in FIG. 1M in response to the user operation. The user interface 19E includes an information bar 193a, a create control 193b, a smear control 193c, and another control. The information bar 193a is used to display text information identified from the first image, the create control 193b is used to create a schedule based on content in a current interface, and the smear control 193c is used to return to a theme editing interface (the user interface 19D shown in FIG. 1L). For content of the another control, refer to the user interface 17 shown in FIG. 1G.

As shown in FIG. 1M, when detecting a user operation on the create control 193b, the electronic device may create a schedule in response to the user operation. Then, the user interface 18 shown in FIG. 1H may be displayed. For content of the user interface 18, refer to the foregoing description. Details are not described herein again.

In this embodiment of this application, an import control (for example, the import control 125 shown in the user interface 12) is added to a schedule creation interface. The user may select an image in a local storage (for example, a gallery application) by using the import control. Correspondingly, the electronic device may identify the image selected by the user, and create a schedule based on the image. In the method, image data of another application (for example, the gallery application) may be imported, by performing a simple user operation, into an application (for example, the system calendar) that creates a schedule, to create a schedule. In the method, the user operation is greatly reduced, thereby improving user experience.

Second implementation: Create a schedule by sharing an image.

In this embodiment of this application, in response to a share operation on a screenshot or a share operation on an image in a gallery, the electronic device may create a schedule based on the image for the share operation.

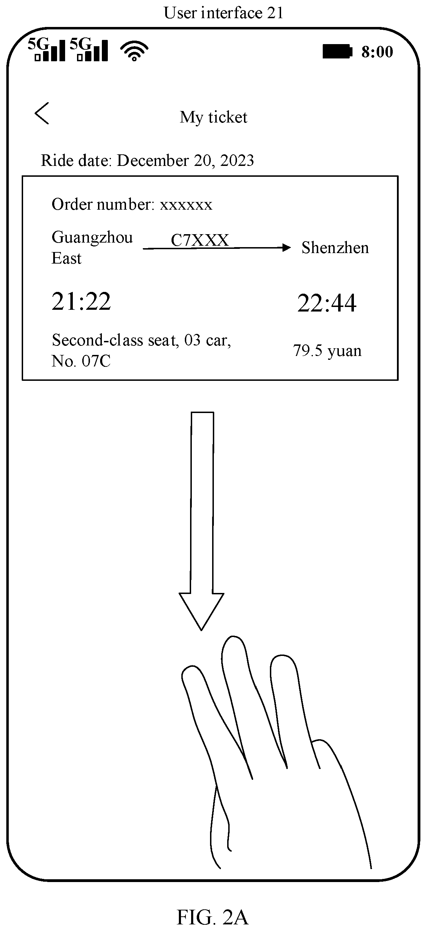

With reference to FIG. 2A to FIG. 2F, the following provides description by using an example in which creation of a schedule is triggered by sharing a screenshot.

FIG. 2A shows an example of an application interface of a ticket purchase application according to an embodiment of this application. FIG. 2A shows an example of ticket information of a ticket purchased by a user.

In a process of displaying the user interface 21 shown in FIG. 2A, the electronic device may detect a screenshot operation. The foregoing screenshot operation may be implemented by using a physical key acting on the electronic device, for example, a power key or a volume key, or may be implemented by performing a touch operation on a screen of the electronic device, for example, a three-finger swipe down operation or a knuckle knock shown in FIG. 2A. This is not limited in this application.

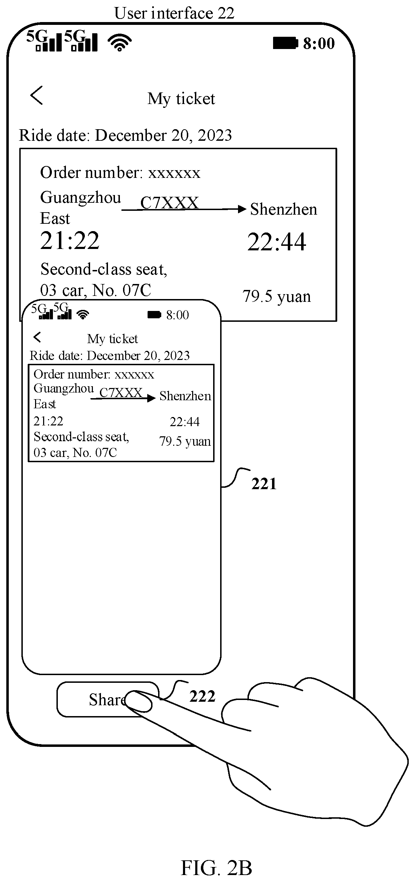

In response to the foregoing screenshot operation, the electronic device may save a user interface on the screen at a current moment as one frame of image, that is, a screenshot image (screenshot). Then, the electronic device may display a preview of the foregoing screenshot on the screen, so as to prompt the user that one frame of screenshot is obtained. Referring to FIG. 2B, the user interface 22 is an example of a user interface for displaying the preview of the screenshot on the screen according to an embodiment of this application. In this application, the foregoing user interface 21 may be referred to as a first interface, the ticket information in the user interface 21 may be referred to as first schedule information, and the foregoing screenshot may be referred to as a screenshot image of the first interface.

As shown in FIG. 2B, the user interface 22 may include a floating window 221 and a share control 222. The floating window 221 is used to display a preview of a screenshot of the user interface shown in FIG. 2A. The share control 222 is used to send the foregoing screenshot to another application.

FIG. 2B shows an example in which the floating window 221 and the share control 222 are floated in the lower left corner area of the screen. It should be understood that the floating window 221 and the share control 222 may alternatively be located in another area of the screen, such as the upper right corner, the lower right corner, and the upper left corner of the screen. This is not limited in this embodiment of this application. The user interface 22 may further include another control, such as a control used to slide a screenshot. This is not limited in this application.

In this embodiment of this application, the electronic device may keep displaying the floating window 221 and the share control 222 for a period of time based on a preset timer for browsing by the user. The foregoing period of time is, for example, 3 seconds. After the timer times out, the electronic device may no longer display the floating window 221 and the share control 222.

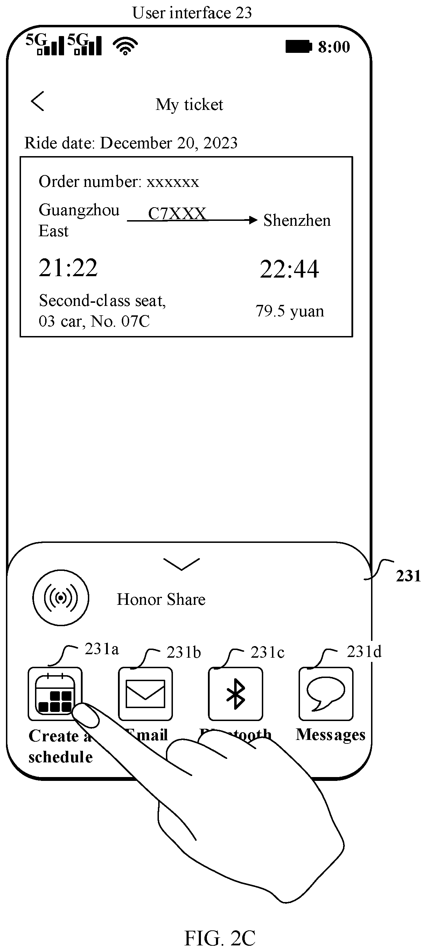

As shown in FIG. 2B, the user may touch the share control 222. Correspondingly, the electronic device displays the share window on an original user interface in response to the user operation. As shown in FIG. 2C, a share window 231 is displayed in a user interface 23. The share window 231 is used to display an application that can receive a screenshot. FIG. 2C shows an example in which the share window 231 includes a schedule creation icon 231a, an email icon 231b, a Bluetooth icon 231c, and a message icon 231d. It should be understood that the share window 231 may further include another application icon. When a quantity of applications is greater than a window size of the share window, the share window may display application icons by using a plurality of pages, and the user may browse other application icons in a manner such as sliding content in the share window.

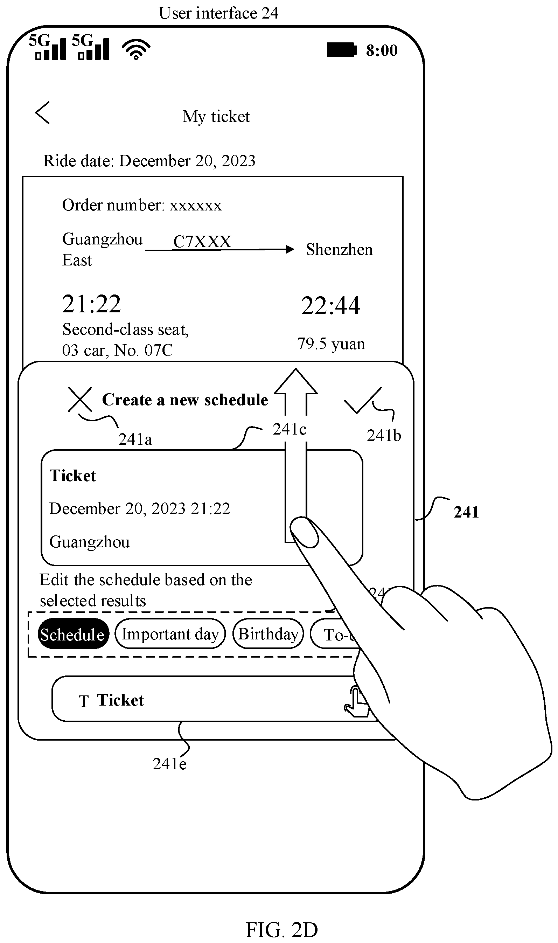

As shown in FIG. 2C, when detecting a user operation on the schedule creation icon 231a, the electronic device may display a schedule creation window on an original user interface in response to the user operation. For example, the electronic device may display a user interface 24 shown in FIG. 2D, and the user interface 24 may include a schedule creation window 241. The schedule creation window 241 is used to display schedule information and a related control that are identified from the screenshot. In this application, the foregoing schedule creation icon 231a may also be referred to as a first icon.

For example, the schedule creation window 241 may include an exit control 241a, a create control 241b, schedule information 241c, a schedule attribute bar 241d, and a schedule theme bar 241f. A size, a location, and the like of the schedule creation window 241 are not limited in this application. The exit control 241a is used to exit from creating a schedule. The create control 241b is used to create a schedule based on content of the schedule creation window 241. The schedule information 241c is used to display the information identified based on the screenshot, such as "Ticket, December 20, 2023 21:22, Guangzhou". The schedule attribute bar 241d is used to display the schedule attribute identified based on the screenshot, such as "default". The schedule theme bar 241f is used to display the theme information identified based on the screenshot, such as "ticket".

Optionally, the user may modify schedule setting by using a schedule setting option in the schedule creation window 241 in the user interface 24, such as modifying a schedule attribute or changing time information.

It should be understood that the share operation may be further performed an image of a chat window. For example, the user touches and holds the image, and the electronic device displays a share control (for example, the share control 222 in the following description). The share operation may be an operation performed on the share control.

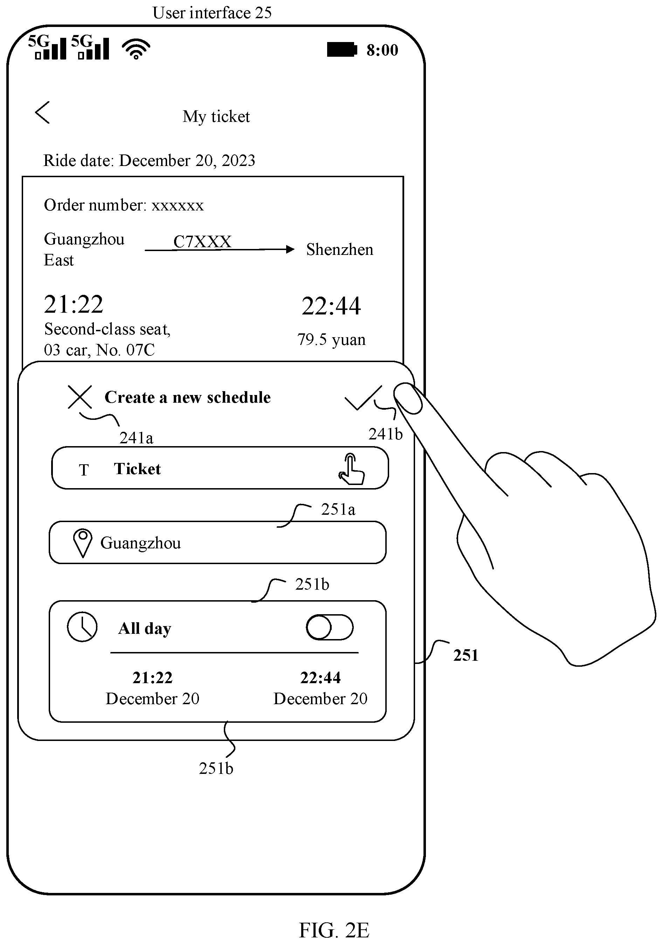

Optionally, the schedule creation window 241 may display only some schedule setting options, and the user may instruct, by performing a sliding operation, the electronic device to display a hidden schedule setting option. As shown in FIG. 2D, the user may perform an upward sliding operation in the schedule creation window 241. Correspondingly, the electronic device may display the hidden schedule setting option in response to the user operation. For example, the electronic device may display a user interface 25 shown in FIG. 2E, and the user interface 25 may include an originally hidden schedule setting option, such as a location bar 251a and a remind control 251b.

It should be understood that the foregoing schedule creation window 241 may further have another schedule setting option, such as a priority. This is not limited in this application. The priority is used to indicate a degree of importance of the schedule, such as important and ordinary. For example, when a time is about to arrive, the priority of the schedule is set to be important. If a departure time of the foregoing ticket is relatively close to a current time, the electronic device may set a priority of the schedule to be important, and may display an "important" identifier in the schedule information.

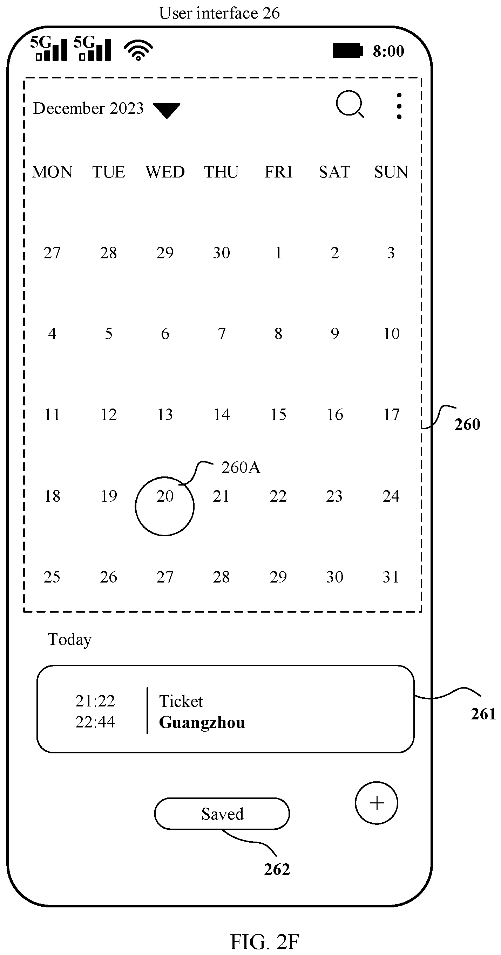

In some embodiments, the user may touch the create control 241b in the user interface 24 shown in FIG. 2D or in the user interface 25 shown in FIG. 2E. Correspondingly, the electronic device may create a schedule based on current schedule information in the schedule creation window, and display a user interface 26 shown in FIG. 2F.

The user interface 26 may include calendar information 260, schedule information 261, and a notification window 262. The calendar information 260 includes a date 260A in a selected state, and the date in the selected state is a schedule time in a schedule creation window. The schedule information 261 is used to display thumbnail information of a schedule corresponding to a schedule creation window. The notification window 262 is used to remind the user that the created schedule has been saved. Optionally, display of the notification window 262 may be cancelled after the notification window is displayed for preset duration.

It should be understood that, FIG. 2A to FIG. 2F show an example of creating a schedule. In this application, a plurality of schedules may alternatively be created based on a screenshot. For example, the user interface 21 shown in FIG. 2A may include information about a plurality of tickets, so that the electronic device may identify the plurality of pieces of schedule information based on a screenshot including a plurality of pieces of schedule information (for example, a plurality of tickets), so as to create a plurality of schedules.

In this embodiment of this application, an icon (for example, a schedule creation icon 231a) for schedule creation is added to a sharing function, to support importing of image data of another application (for example, the gallery application) into an application (for example, the system calendar) that creates a schedule, to create a schedule. In the method, the user operation is greatly reduced, thereby improving user experience.

Third implementation: Create a schedule by using a smart transfer service.

In this embodiment of this application, the smart transfer service is a service that matches an application capable of receiving to-be-processed data and that provides a user with quick sending of the to-be-processed data to a target application. The to-be-processed data includes but is not limited to a text, a picture, a video, a document, a hyperlink, or the like. The electronic device may determine the to-be-processed data based on an operation control used when smart transfer is triggered.

In this embodiment of this application, the to-be-processed data is data (for example, an image or text information) that includes schedule information. The target application is an application that provides schedule creation, such as the system calendar. The user may send the to-be-processed data to the target application by using the smart transfer service, so that the target application can identify schedule information in the to-be-processed data to create a schedule.

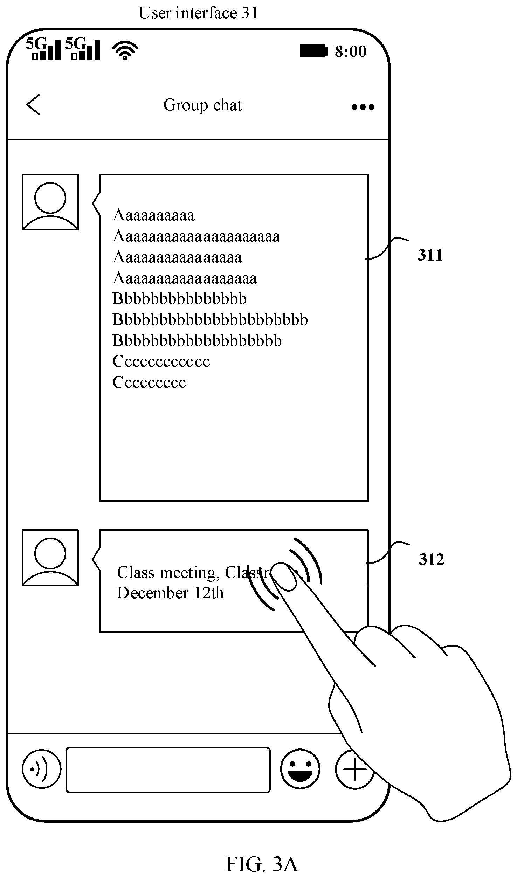

With reference to FIG. 3A to FIG. 3E, the following provides description by using an example in which chat information of a chat application is the to-be-processed data.

FIG. 3A shows an application interface of a chat application according to an embodiment of this application. A user interface 31 shown in FIG. 3A includes chat information 311 and chat information 312. FIG. 3A shows an example in which the chat information 311 does not include schedule information, and the chat information 312 includes schedule information "Class meeting, Classroom, December 12th".

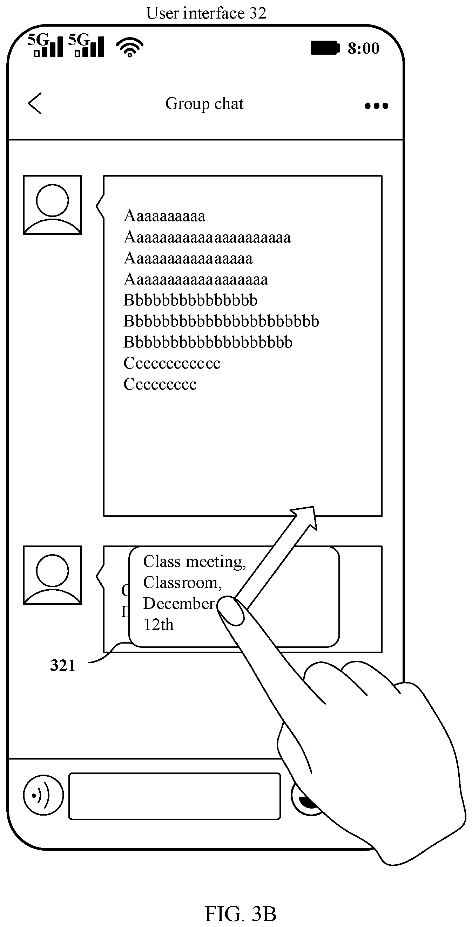

Description is provided by using an example in which the chat information 312 is the to-be-processed data selected by the user. In a process of displaying the chat information 312, the electronic device may detect whether there is a user operation performed on the chat information 312. Referring to FIG. 3A, the electronic device may detect a touch and hold operation performed on the chat information 312. In response to the foregoing user operation, the electronic device may switch the chat information 312 to a floating state. For example, the electronic device may display a user interface 32 shown in FIG. 3B, where the user interface 32 may include a floating window 321, and the floating window 321 is used to display the chat information 312. A display position of the floating window 321 may be adjusted in real time by following a moving track of a touch operation of the user, that is, the display position of the floating window 321 is adjusted. It should be understood that the chat information 312 may alternatively be an image. In an implementation, if the user touches and holds the image, and if the user touches and holds the image for a preset time without releasing a finger, the electronic device displays the image as a floating window (for example, a floating window 321 in the following description). In an implementation, if the user touches and holds the image, a plurality of controls such as a share control may be displayed. If the user continues to touch and hold the picture beyond the preset time, the electronic device displays the image as a floating window (for example, a floating window 321 in the following description).

It should be understood that FIG. 3A shows an example of the touch and hold operation for description. In another embodiment of this application, another operation may alternatively be performed, such as a tap, a voice instruction, or a double tap operation. In this application, the foregoing chat application may be referred to as a second application, the user interface 31 may be referred to as a second interface of the second application, the area in which the foregoing chat information 312 is located may be referred to as a first area, the foregoing chat information 312 may be referred to as first text information, and the foregoing schedule information "Class meeting, Classroom, December 12th" may be referred to as first schedule information.

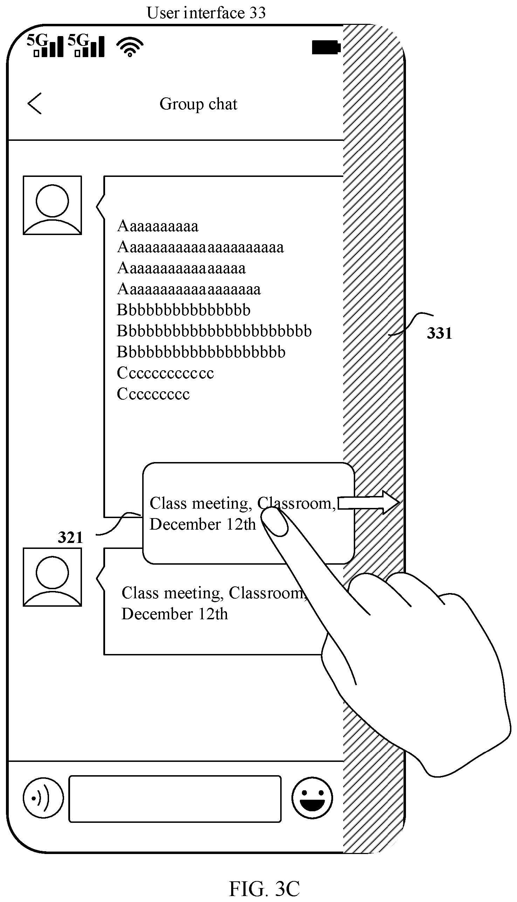

As shown in FIG. 3B, the electronic device may detect an operation of dragging, by the user, the floating window 321 to slide toward a right side of the screen. After detecting that the floating window 321 is approaching the right side of the screen, the electronic device may display a visual indication of light strip. As shown in FIG. 3C, the user interface 33 includes the floating window 321 and a visual indication of light strip 331. The visual indication of light strip 331 may be used to prompt the user that the floating window 321 has approached the right side of the screen. In this case, the user may determine to continue sliding rightward to trigger a service corresponding to the right side of the screen, or determine to stop sliding rightward to avoid triggering the service corresponding to the right side of the screen.

In this embodiment of this application, the service corresponding to the right side of the screen may be the smart transfer service. If the smart transfer is triggered, the electronic device may display, on the right side of the screen, a menu bar that includes one or more candidate application icons. A candidate application is an application that is selected by the electronic device from all installed applications and that is capable of receiving the to-be-processed data.

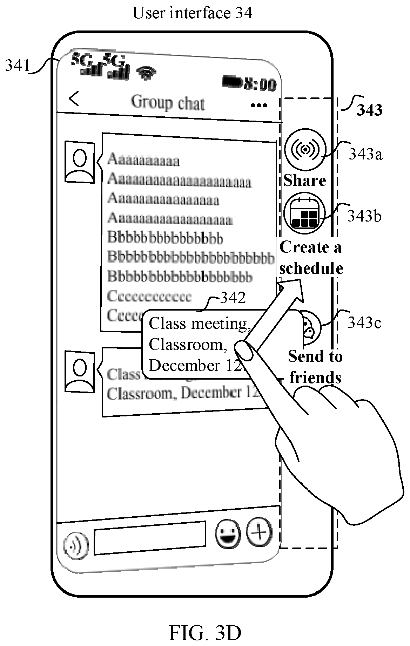

As shown in FIG. 3C, the electronic device may detect the user operation that the floating window 321 continues sliding rightward. In response to the foregoing operation, the electronic device may trigger the smart transfer service in a trigger region on the right side, and display the menu bar that includes one or more candidate application icons. For example, the electronic device may display a user interface 34 shown in FIG. 3D. Referring to FIG. 3D, the electronic device may display a menu bar 343 on the right side of the screen. The menu bar 343 includes a plurality of application icons. As shown in FIG. 3D, the menu bar 343 may display a share icon 343a, a schedule creation icon 343b (which may also be referred to as a first icon), a message icon 343c, and the like. One icon may correspond to one application. All of applications corresponding to the foregoing icons are applications (candidate applications) capable of receiving the chat information 312 of the floating window 321. For example, an application corresponding to the schedule creation icon 343b may be the system calendar (which may also be referred to as the first application). It may be understood that, when there are many candidate applications and not all of the candidate applications can be displayed in the menu bar 343 at the same time, the electronic device may further update, based on the drag operation of the user, candidate application icons currently displayed in the menu bar 343.

A trigger region (which may also be referred to as a first area) is a touch area with a fixed shape and size on the screen. The trigger region on the right side is a rectangular touch area that extends from an edge on the right side of the screen to the other side.

Optionally, the electronic device may determine, based on a distance from a position of a current touch point between a finger and the screen to the trigger region on the right side, whether the floating window 321 is approaching the right side of the screen. Further, when identifying that the current touch point is within the trigger region on the right side, the electronic device may determine to trigger the service corresponding to the right side of the screen.

For example, the first area may alternatively be an area in which the visual indication of light strip 331 is located.

In this embodiment of this application, the service corresponding to the trigger region on the right side may be the smart transfer service. The smart transfer service is a service that matches an application capable of receiving to-be-processed data and that provides a user with quick sending of the to-be-processed data to another target application. The to-be-processed data includes but is not limited to a text, a picture, a video, a document, a hyperlink, or the like. The electronic device may determine the to-be-processed data based on the floating window used when smart transfer is triggered. For example, in the foregoing scenario, the floating window 321 may be referred to as the first control, and the chat information 312 corresponding to the floating window 321 may be referred to as the to-be-processed data (or the first data). In this application, the electronic device may detect a first operation (for example, the foregoing touch and hold and drag operations) of dragging a first control (for example, the foregoing floating window 321) into a first area (for example, the foregoing trigger region on the right side) on the screen, and in response to the first operation, display a first icon (for example, the foregoing schedule creation icon 343b) of the first application (for example, the foregoing system calendar). It should be understood that, the first operation of dragging the first control into the first area on the screen may mean that a right edge of the first control enters the first area, or may mean that a part of the first control enters the first area, or may mean that a touch point between a finger that touches and holds the first control and the screen enters the first area. This is not limited in this application. For example, the foregoing user operation that the floating window 321 shown in FIG. 3C continues sliding rightward to trigger display of the foregoing menu bar may be referred to as the foregoing first operation of dragging the first control into the first area on the screen.

In addition, the original user interface may be adjusted to a right perspective image (for example, an image 341 shown in FIG. 3D), which forms an animation effect of "door opening" with the menu bar 343, thereby enhancing user experience. In an implementation, after "door opening", an image displayed on the left side is a user interface captured by the electronic device at a triggering moment. In other words, after "door opening", in a process of selecting the target application by the user, the image on the left side is fixed and does not change over time. In some other embodiments, the electronic device may alternatively display a user interface of an original application in real time after "door opening". In this case, after "door opening", the image on the left side changes over time in the process of selecting the target application by the user.

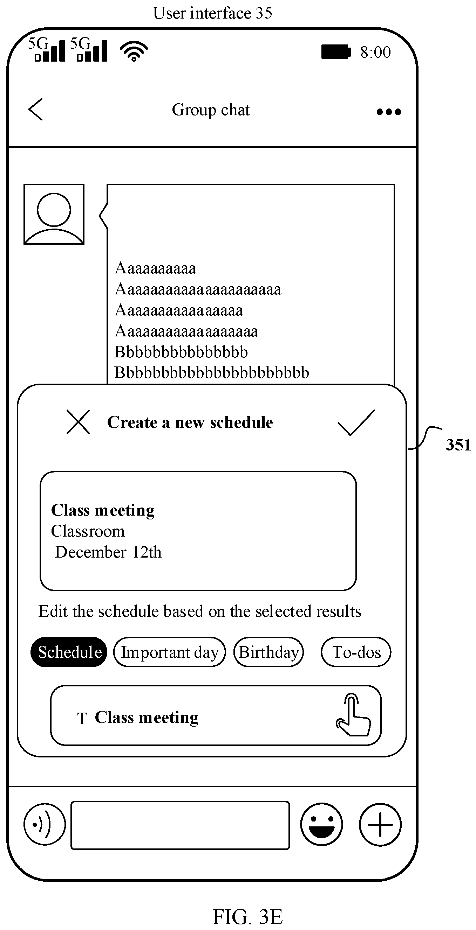

As shown in FIG. 3D, the user may select the target application by using a method for dragging the floating window 321 to an area in which the target application icon (for example, the schedule creation icon 343b) is located (which may also be referred to as a second area corresponding to the first icon). Then, after the electronic device detects a user operation of dragging the floating window 321 to the schedule creation icon 343b and releasing the floating window, the electronic device may confirm that the system calendar corresponding to the schedule creation icon 343b is the target application, identify schedule information in chat information in the floating window 321, and display a schedule creation window for the schedule information. For example, the electronic device may display a user interface 35 shown in FIG. 3E, where the user interface 35 may include a schedule creation window 351, and the schedule creation window 351 is used to display schedule information and a schedule setting control that are identified based on the chat information. In this application, schedule information included in the chat information 312 may be referred to as first schedule information, and schedule information displayed in the schedule creation window 351 may be referred to as second schedule information. The schedule creation window 351 may also be referred to as a first window.

In this application, the second area corresponding to the first icon may be an area in which the first icon is located, or may be an area within a preset distance from the first icon. This is not limited in this application.

For detailed content such as a control of the schedule creation window 351, refer to related descriptions of the schedule creation window 241 in the user interface 24 shown in FIG. 2D. Details are not described herein again.

Optionally, after detecting that the floating window 321 is dragged to a position corresponding to the schedule creation icon, the electronic device may highlight, for example, enlarge or discolor the schedule creation icon, so as to prompt the user that an application corresponding to the currently selected schedule creation icon is used as the target application, thereby avoiding incorrect transmission.

In some other embodiments of this application, the user may identify schedule information of a screenshot by using the smart transfer service. For example, the user may take a screenshot of the user interface 21 shown in FIG. 2A. Correspondingly, the electronic device may display the user interface 22 shown in FIG. 2B in response to the user operation. Then, the user may drag the floating window 221 in the user interface 22 to the right side of the screen. A specific operation may be the foregoing user operation shown in FIG. 3B to FIG. 3D, which triggers the smart transfer service. Therefore, the electronic device may send the screenshot in the floating window 221 to the system calendar, perform schedule identification on the screenshot, and display the user interface 24 shown in FIG. 2D.

It should be understood that the foregoing FIG. 3A to FIG. 3E show a scenario in which the smart transfer service is triggered for the chat information. In this application, after the foregoing touch and hold and drag operations in FIG. 3A to FIG. 3D are performed on a screenshot, an image in a gallery, text information, and the like, the smart transfer service may be triggered to generate a schedule. This application sets no limitation on a carrier (for example, an image or a text) of the schedule information.

For example, the electronic device may display a third interface of a third application (for example, a chat application), where the third interface includes a plurality of dialog boxes; detect a touch and hold operation on the third interface when the third interface is displayed; and display a first control (for example, a floating window that includes the foregoing plurality of dialog boxes) in the third interface in response to the touch and hold operation on the third interface. Then, the electronic device may display the foregoing first icon in response to a first operation of touching and holding without releasing the third interface and dragging the third interface to a trigger region; detect a second operation of continuing to drag the first control into a second area in which the first icon is located and releasing the first control; and display the foregoing first window in response to the second operation. When the touch and hold operation and the first operation are performed, the mobile phone does not leave the screen. In other words, the touch and hold operation and the drag operation are continuous operations without releasing a finger.

For another example, the electronic device may display a fourth interface of the gallery application, where the fourth interface includes a first image; detect a touch and hold operation on the first image when the fourth interface is displayed; and display the foregoing first control in the fourth interface in response to the touch and hold operation on the first image, where the first data is the first image. It should be understood that the foregoing touch and hold operation is only an example. In this application, the touch and hold operation may alternatively be replaced with another user operation. The another user operation may be a touch operation (for example, a tap operation, an upward sliding operation, a downward sliding operation, or a sideward sliding operation) of the user, may be a contactless operation (for example, an air gesture or a mouse operation), or may be a voice instruction of the user. This is not specifically limited in this application.

In this embodiment of this application, the to-be-processed data may be simply and quickly selected by using the smart transfer service, so as to create a schedule based on the to-be-processed data. The operation is convenient, thereby improving user experience.

Fourth implementation: Create a schedule by identifying a screen through pressing.

In this embodiment of this application, the user may extract text information of a current interface through two-finger pressing. Correspondingly, the electronic device displays the extracted text information and a create control in response to the user operation. The create control is used to create a schedule based on the extracted text information. Then, when detecting a user operation performed on the create control, the electronic device may identify schedule information based on the extracted text in response to the user operation, where the identified schedule is used to create a schedule.

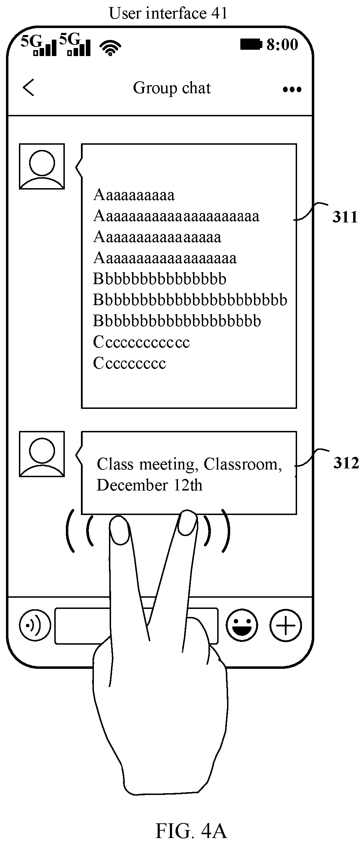

With reference to FIG. 4A to FIG. 4B, the following provides description by using an example in which a current interface is an application interface of a chat application.

FIG. 4A shows an application interface of a chat application according to an embodiment of this application. A user interface 41 shown in FIG. 4A includes chat information 311 and chat information 312. FIG. 4A shows an example in which the chat information 311 does not include schedule information, and the chat information 312 includes schedule information "Class meeting, Classroom, December 12th". In this application, the foregoing chat application may also be referred to as a fourth application, the user interface 41 may also be referred to as an eighth interface of the fourth application, and the schedule information included in the chat information 312 may also be referred to as first schedule information.

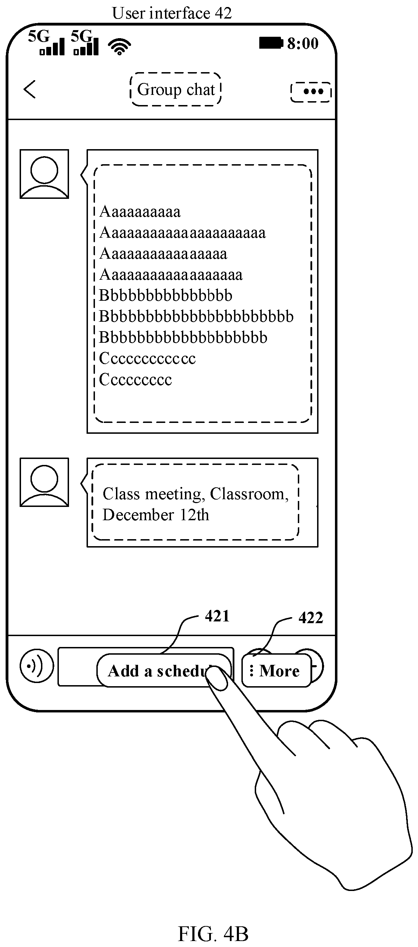

As shown in FIG. 4A, when detecting a user operation of pressing a screen with two fingers, the electronic device may extract, in response to the user operation, a text from the user interface 41 currently displayed on the screen. In an identification process, the electronic device may display a motion (not shown in the figure) of a scanning interface. After the extraction is completed, the user interface 42 shown in FIG. 4B may be displayed. The user interface 42 shows an example in which a dashed line box is used to indicate the extracted text. The electronic device may alternatively highlight the extracted text in another manner, for example, coloring an area in which the text is located. This is not limited in this application.

In some other embodiments of this application, the user operation of extracting the text currently displayed on the screen may not be limited to the foregoing user operation of pressing a screen with two fingers, and may alternatively be a tap operation, a touch and hold operation, an upward sliding operation, a downward sliding operation, a sideward sliding operation, or the like. This is not specifically limited in this application.

The user interface 42 may include an add control 421 and a more control 422, where the add control 421 is used to identify schedule information from the text extracted from the interface; the more control 422 may include another option for performing another operation on the text. This is not limited in this application.

As shown in FIG. 4B, when detecting a user operation on the add control 421, the electronic device may display, in an original user interface by using a floating window in response to the user operation, the schedule information identified from the text extracted from the interface. For example, the electronic device may display the user interface 35 shown in FIG. 3E, and the user interface 35 may include a schedule creation window 351. In this application, the user operation of pressing a screen with two fingers may be referred to as a user operation performed on the eighth interface, the add control 421 may be referred to as a third control, and the schedule creation window 351 may also be referred to as a first window.

In this embodiment of this application, as shown in FIG. 4A, when detecting the user operation of pressing a screen with two fingers, the electronic device may alternatively trigger, in response to the user operation, the foregoing smart transfer service to create a schedule. For example, when duration of two-finger pressing by the user meets preset duration, the electronic device may display, in response to the user operation, all texts identified from the interface as floating windows. Then, in response to the drag operation performed by the user through touching and holding without releasing a finger, the electronic device displays an application icon corresponding to the smart transfer service, including a schedule creation icon (for example, a schedule creation icon 231a). Then, in response to a user operation of dragging to the schedule creation icon, the electronic device displays the schedule creation window (for example, the schedule creation window 351). For a detailed process, refer to the foregoing related content of the smart transfer service.

In this embodiment of this application, a method for identifying a screen through pressing may be used to identify a text in an entire interface. A schedule is created based on the identified text. In the method, the text in the entire interface may be conveniently selected to create the schedule, thereby simplifying a creation step.

The following describes the "multi-schedule identification" function, the "context inference" function, and the "location recommendation" function of the electronic device. The foregoing functions may be enabled by default, or may be enabled by using a control. This is not limited in this application.

In some embodiments of this application, when the to-be-processed data includes schedule information of a plurality of schedules, the electronic device may identify the schedule information of the plurality of schedules in the to-be-processed data, and then display the schedule information of the plurality of schedules. The to-be-processed data may be a screenshot, may be a plurality of dialog boxes, or may be an image. This is not limited in this application.

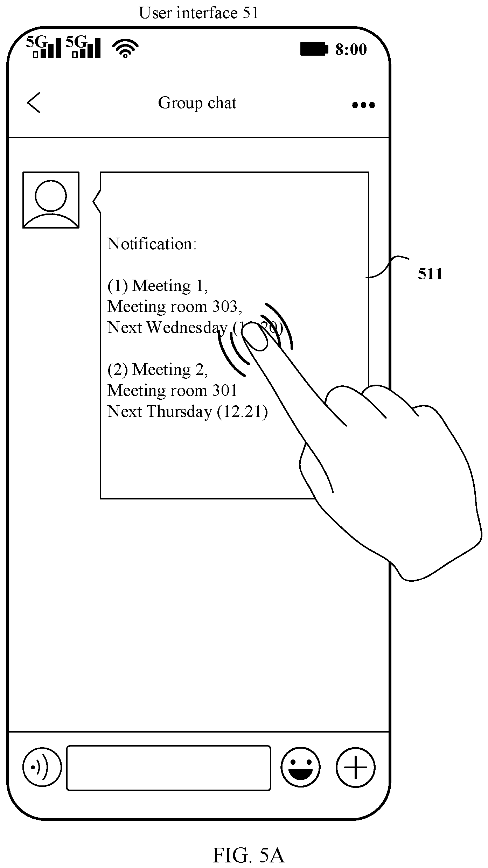

For example, the following describes the "multi-schedule identification" function of the electronic device with reference to FIG. 5A to FIG. 5G.

FIG. 5A shows an application interface of a chat application according to an embodiment of this application. A user interface 51 shown in FIG. 5A includes chat information 511. This embodiment of this application shows an example in which the chat information 511 includes two pieces of schedule information. The first piece of schedule information is "meeting 1, meeting room 303, next Wednesday (12.20)", and the second piece of schedule information is "meeting 2, meeting room 301, next Thursday (12.21)". It should be understood that, in another embodiment of this application, the foregoing two pieces of schedule information may alternatively be located in two pieces of chat information. The two pieces of chat information may alternatively be in a dialog form, or may each be chat information received by the electronic device. In this application, the two pieces of schedule information included in the chat information 511 may also be referred to as schedule information of a second schedule and schedule information of a third schedule.

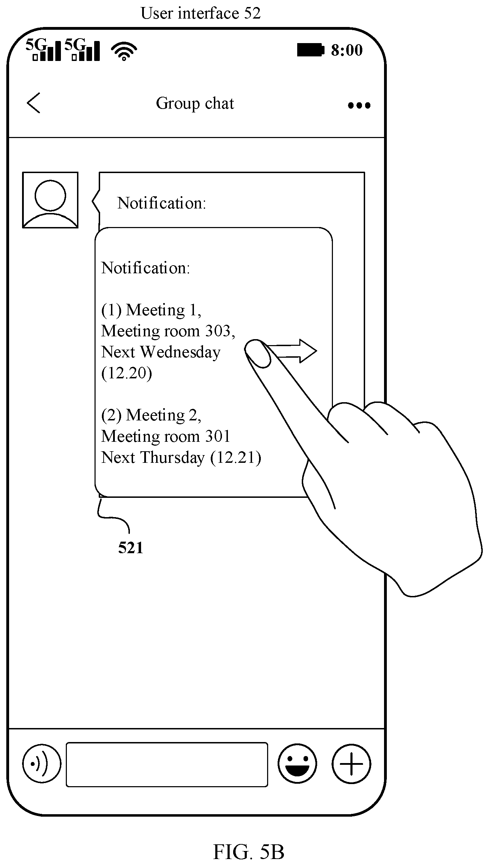

In a process of displaying the chat information 511, the electronic device may detect whether there is a user operation performed on the chat information 511. Referring to FIG. 5A, the electronic device may detect a touch and hold operation performed on the chat information 511. The touch and hold operation performed on the chat information 511 may be a touch and hold operation with touching and holding exceeding a specific time. In response to the foregoing user operation, the electronic device may switch the chat information 511 to a floating state. For example, the electronic device may display a user interface 52 shown in FIG. 5B, where the user interface 52 may include a floating window 521, and the floating window 521 is used to display the chat information 511. A display position of the floating window 521 may be adjusted in real time by following a moving track of a touch operation of the user, that is, the display position of the floating window 521 is adjusted.

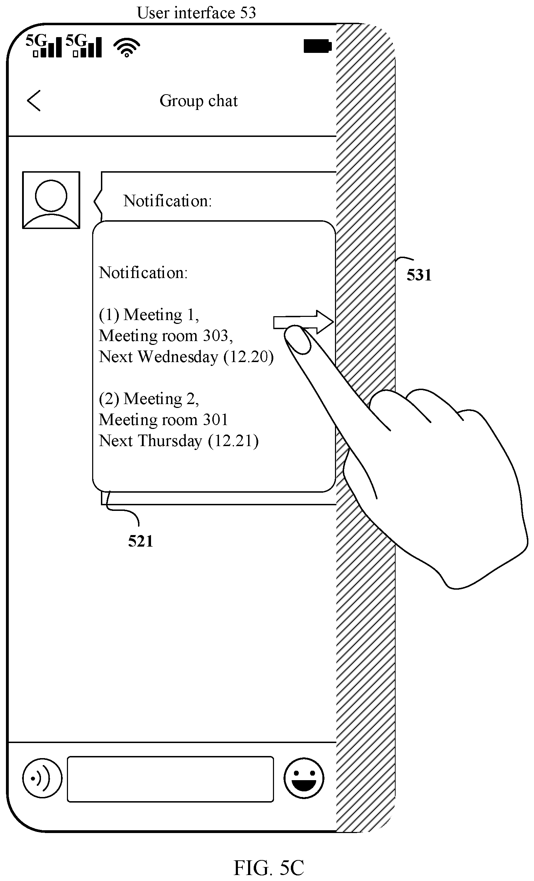

As shown in FIG. 5B, the electronic device may detect an operation of dragging, by the user, the floating window 521 to slide toward a right side of the screen. After detecting that the floating window 521 is approaching the right side of the screen, the electronic device may display a visual indication of light strip. As shown in FIG. 5C, the user interface 53 includes the floating window 521 and a visual indication of light strip 531. The visual indication of light strip 531 may be used to prompt the user that the floating window 521 has approached the right side of the screen. In this case, the user may determine to continue sliding rightward to trigger a service corresponding to the right side of the screen, or determine to stop sliding rightward to avoid triggering the service corresponding to the right side of the screen.

In this embodiment of this application, the service corresponding to the right side of the screen may be the smart transfer service. If the smart transfer is triggered, the electronic device may display, on the right side of the screen, a menu bar that includes one or more candidate application icons. A candidate application is an application that is selected by the electronic device from all installed applications and that is capable of receiving the to-be-processed data.

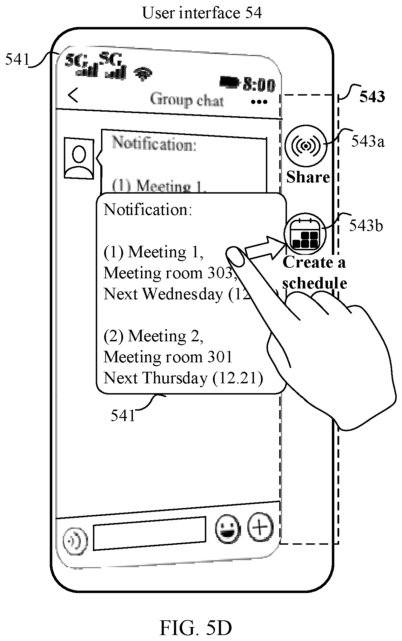

As shown in FIG. 5C, the electronic device may detect the user operation of continuing sliding rightward. In response to the foregoing operation, the electronic device may trigger the smart transfer service, and display the menu bar that includes one or more candidate application icons. For example, the electronic device may display a user interface 54 shown in FIG. 5D. Referring to FIG. 5D, the electronic device may display a menu bar 543 on the right side of the screen. The menu bar 543 includes a plurality of application icons. As shown in FIG. 5D, the menu bar 543 may display a share icon 543a, a schedule creation icon 543b, a message icon 543c, and the like. One icon corresponds to one application. All of applications corresponding to the foregoing icons are applications (candidate applications) capable of receiving the chat information 511 in the floating window 521. It may be understood that, when there are many candidate applications and not all of the candidate applications can be displayed in the menu bar 543 at the same time, the electronic device may further update, based on the drag operation of the user, candidate application icons currently displayed in the menu bar 543.

In addition, the original user interface may be adjusted to a right perspective image (for example, an image 541 shown in FIG. 5D), which forms an animation effect of "door opening" with the menu bar 543, thereby enhancing user experience. In an implementation, after "door opening", an image displayed on the left side is a user interface captured by the electronic device at a triggering moment. In other words, after "door opening", in a process of selecting the target application by the user, the image on the left side is fixed and does not change over time. In some other embodiments, the electronic device may alternatively display a user interface of an original application in real time after "door opening". In this case, after "door opening", the image on the left side changes over time in the process of selecting the target application by the user.

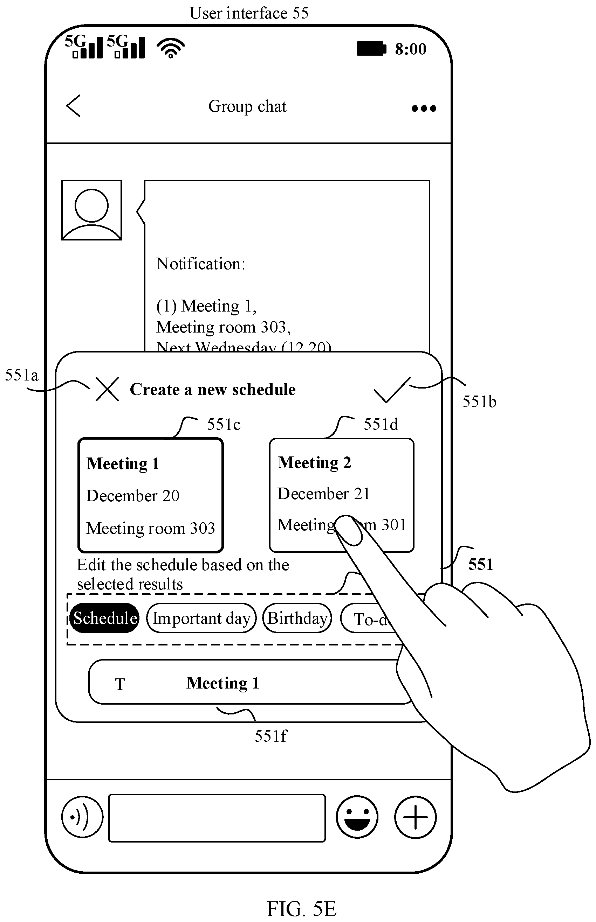

As shown in FIG. 5D, the user may drag the floating window 521 to the area in which the target application icon (for example, the schedule creation icon 543b) is located. The electronic device may identify schedule information in chat information in the floating window 521 in response to the user operation of dragging the floating window 521 to the schedule creation icon and releasing the floating window, and display a schedule creation window, where the schedule creation window may include a plurality of pieces of identified schedule information. For example, the electronic device may display a user interface 55 shown in FIG. 5E, where the user interface 55 may include a schedule creation window 551.

The schedule creation window 551 may include a plurality of pieces of identified schedule information, for example, first schedule information 551c and second schedule information 551d. FIG. 5E shows, by using a bold frame, that the first schedule information 551c is schedule information in a selected state. The schedule creation window 551 may further include an exit control 551a and a schedule option corresponding to the schedule information (for example, the first schedule information 551c) in the selected state, such as a create control 551b, a schedule attribute bar 551e, and a schedule theme bar 551f. The exit control 551a is used to exit from creating a schedule. The create control 551b is used to create a schedule based on content of the schedule creation window 551. It should be understood that the plurality of pieces of schedule information in the schedule creation window 551 may be in the selected state at the same time. This is not limited in this application. In this application, an area in which the first schedule information 551c is located may be referred to as a second area, and the first schedule information 551c may also be referred to as schedule information of the second schedule. An area in which the second schedule information 551d is located may also be referred to as a third area, and the second schedule information 551d may also be referred to as schedule information of the third schedule. The create control 551b may also be referred to as a second control, and the schedule creation window 551 may also be referred to as the first window.

Optionally, the user may select the first schedule information 551c and/or the second schedule information 551d. Correspondingly, the electronic device may display, in the schedule creation window 551, a schedule option corresponding to the schedule information in a selected state in response to the user operation. Then, the user may modify the schedule information corresponding to the option by using the schedule option corresponding to the schedule information, or the user may tap the create control 551b to create a schedule corresponding to the schedule information in the selected state.

FIG. 5E shows an example in which the first schedule information 551c is in a selected state, and the second schedule information 551d is in an unselected state. In this case, if the user taps the create control 551b, the electronic device may create a schedule corresponding to the first schedule information 551c in response to the user operation.

For example, the user may change the first schedule information 551c from the selected state to the unselected state through touching, or may change the second schedule information 551d from the unselected state to the selected state through touching. In this case, if the user taps the create control 551b, the electronic device may create the schedule corresponding to the second schedule information 551d in response to the user operation, and display a sixth interface of the first application (for example, a system calendar), where the sixth interface includes thumbnail information of the schedule (which may also be referred to as the second schedule) corresponding to the second schedule information 551d, and the thumbnail information of the second schedule may be shown in the first schedule information 571 in a user interface 57.

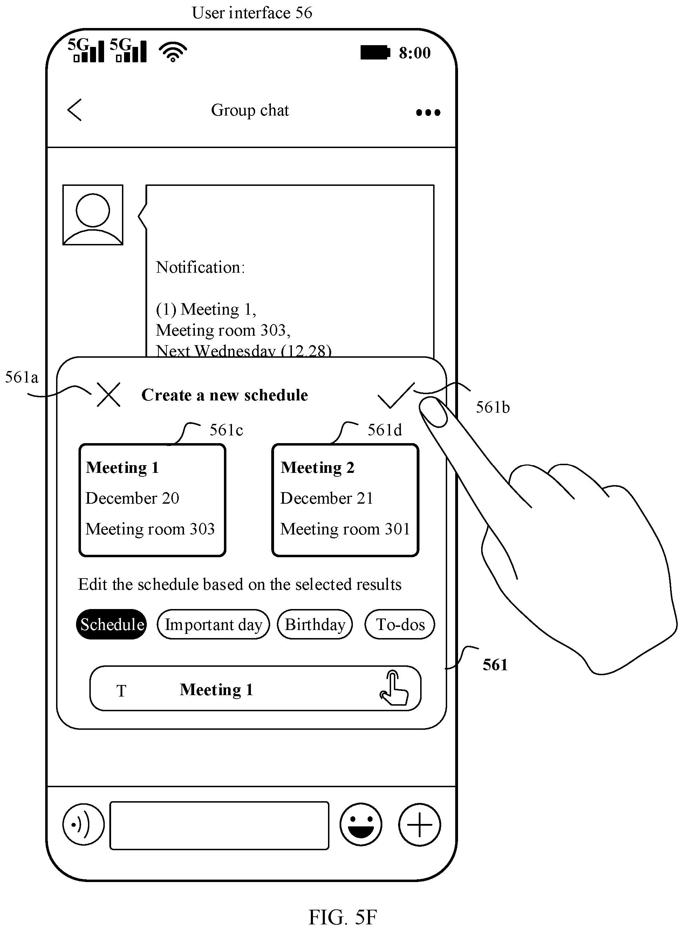

As shown in FIG. 5E, when detecting a user operation on the second schedule information 551d, the electronic device may display the second schedule information 551d in a selected state in response to the user operation. For example, the electronic device may display the user interface 56 shown in FIG. 5F. The user interface 56 includes first schedule information 561c and second schedule information 561d that are both in a selected state, and the exit control 551a and a create control 561b corresponding to the schedule information in the selected state.

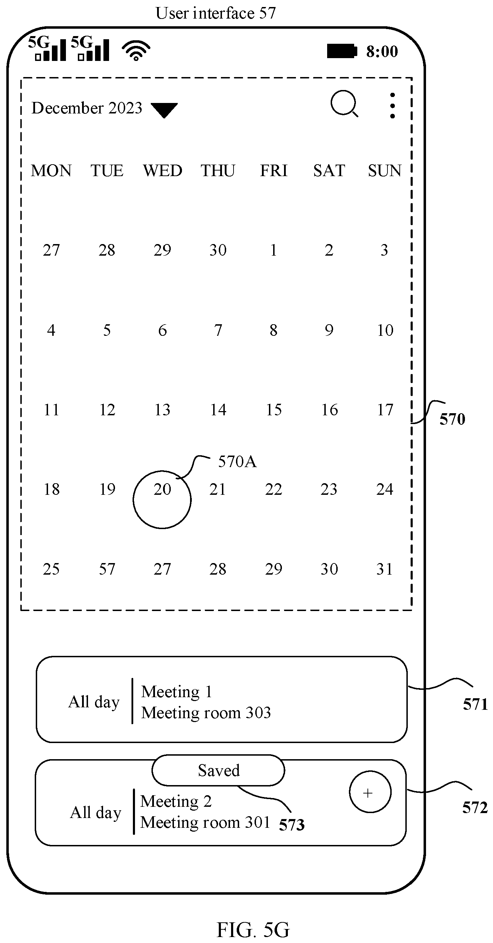

As shown in FIG. 5F, when detecting a user operation on the create control 561b, the electronic device may display the user interface 57 shown in FIG. 5G based on the schedule information (that is, the first schedule information 561c and the second schedule information 561d to create a schedule) in a selected state in the schedule creation window in response to the user operation.

The user interface 57 may include calendar information 570, first schedule information 571, second schedule information 572, and a notification window 573. The calendar information 570 includes a date 570A in a selected state, and the date in the selected state is a schedule time in a schedule creation window. The first schedule information 571 is thumbnail information of the first schedule information 561c. The second schedule information 572 is thumbnail information of the second schedule information 561d. The notification window 573 is used to remind the user that the created schedule has been saved. Optionally, display of the notification window 573 may be cancelled after the notification window is displayed for preset duration. In this application, the user interface 57 may also be referred to as a seventh interface of a first application (for example, a system calendar), and the first schedule information 571 may also be referred to as thumbnail information of a second schedule. The second schedule information 572 may also be referred to as thumbnail information of a third schedule.

It should be understood that, the foregoing FIG. 5A to FIG. 5G describe an example in which one piece of chat information includes a plurality of pieces of schedule information, and a plurality of schedules are created based on the chat information by using the smart transfer service. In another embodiment of this application, a screenshot may include a plurality of pieces of schedule information, or a plurality of dialog boxes may include a plurality of pieces of schedule information, or a picture selected from a gallery includes a plurality of pieces of schedule information, and so on. A carrier of the plurality of pieces of schedule information is not limited in this application. Creation of a schedule may alternatively be triggered by importing an image, sharing, or the like. This is not limited in this application.

For example, the user may alternatively import an image that includes a plurality of pieces of schedule information to create a plurality of schedules. For example, the first image in FIG. 1A to FIG. 1H may alternatively include a plurality of pieces of schedule information, so that the electronic device can identify the plurality of schedules in the first image to create a plurality of schedules.

For another example, the user may alternatively import a plurality of images that include a plurality of pieces of schedule information to create a plurality of schedules. For example, in FIG. 1C, the user may select a plurality of images, where the plurality of images include a plurality of pieces of schedule information. For example, an image 1 includes first schedule information, and an image 2 includes second schedule information. In response to the foregoing operations in FIG. 1D to FIG. 1H, the electronic device may identify the plurality of schedules in the plurality of images to create the plurality of schedules.

For another example, the user may alternatively create a plurality of schedules by sharing a screenshot or a text with an application (for example, a system calendar) that creates a schedule. For example, the screenshot in FIG. 2A to FIG. 2F may alternatively include a plurality of pieces of schedule information, so that the electronic device can identify a plurality of schedules in the first image to create a plurality of schedules.

For another example, the user may further touch and hold a screen to identify a plurality of schedules in a plurality of dialog boxes to create a plurality of schedules. For example, a third interface of a third application (for example, a chat application) is displayed, where the third interface includes a plurality of dialog boxes. When the third interface is displayed, a touch and hold operation on the third interface is detected. In response to the touch and hold operation on the third interface, a first control (for example, a floating window that includes the foregoing plurality of dialog boxes) is displayed in the third interface. First data is content of the plurality of dialog boxes, and the first data includes the plurality of pieces of schedule information. This is not limited in this application.

In this embodiment of this application, when the to-be-processed data includes the schedule information of the plurality of schedules, the electronic device may identify the schedule information of the plurality of schedules in the to-be-processed data, and then display the schedule information of the plurality of schedules, for example, display the plurality of pieces of identified schedule information in the foregoing schedule creation window 551, for example, the first schedule information 551c and the second schedule information 551d. In the method, a plurality of schedules can be quickly created without requiring the user to perform the creation operation for a plurality of times, thereby shortening a creation time and improving user experience.

In some embodiments of this application, when the to-be-processed data includes a plurality of rounds of dialogs, the electronic device may perform context inference on the to-be-processed data to determine schedule information in the to-be-processed data.

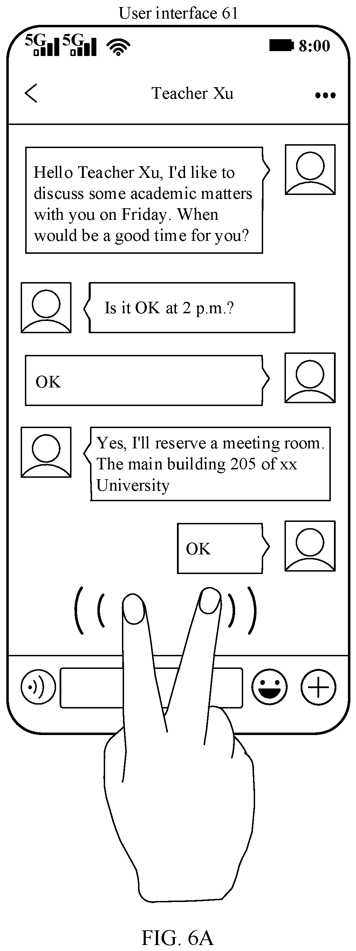

For example, with reference to FIG. 6A to FIG. 6D, the following describes the "context inference" function of the electronic device by using an example of pressing a screen with two fingers. It should be understood that the to-be-processed data of the current application interface may alternatively be sent to a target application (for example, a system application) in the foregoing manner such as screenshot sharing or smart transfer after a screenshot is taken. This is not limited in this application.

FIG. 6A shows an application interface of a chat application according to an embodiment of this application. A user interface 61 shown in FIG. 6A includes a plurality of rounds of dialogs between two users.

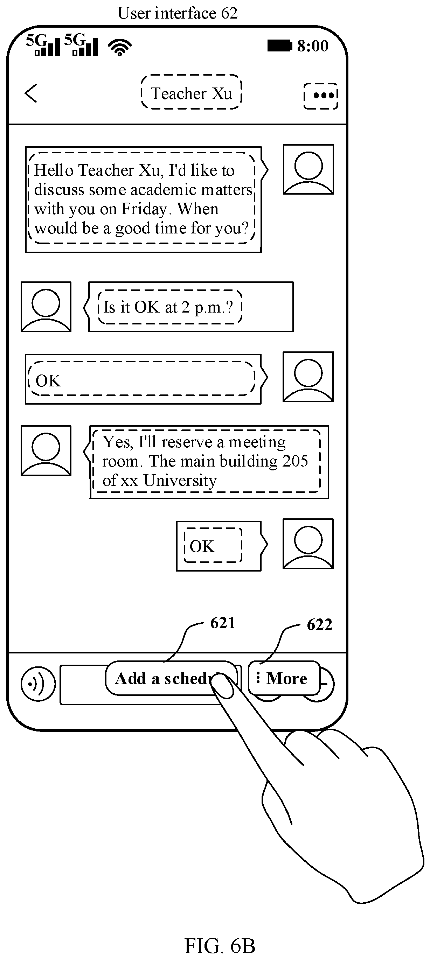

As shown in FIG. 6A, when detecting a user operation of pressing a screen with two fingers, the electronic device may extract, in response to the user operation, a text from the user interface 61 currently displayed on the screen. In an identification process, the electronic device may display a motion (not shown in the figure) of a scanning interface. After the extraction is completed, the user interface 62 shown in FIG. 6B may be displayed. The user interface 62 shows an example in which a dashed line box is used to indicate the extracted text. The electronic device may alternatively highlight the extracted text in another manner, for example, coloring an area in which the text is located. This is not limited in this application.

The user interface 62 may include an add control 621 and a more control 622, where the add control 621 is used to identify schedule information from the text extracted from the interface; the more control 622 may include another option for performing another operation on the text. This is not limited in this application.

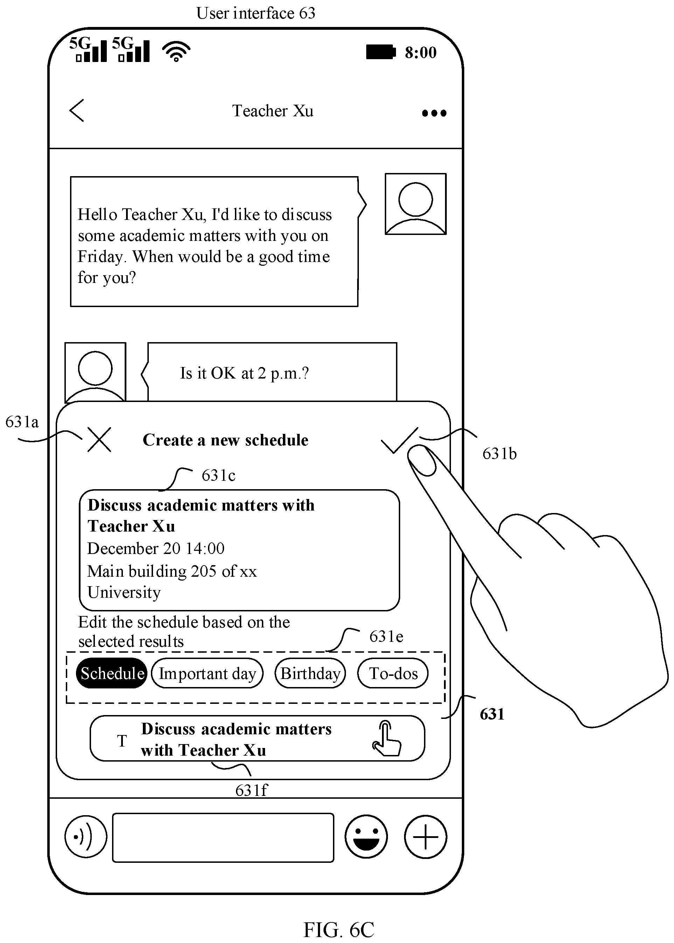

As shown in FIG. 6B, when detecting a user operation on the add control 621, the electronic device may display, in an original user interface by using a floating window in response to the user operation, the schedule information identified from the text extracted from the interface. For example, the electronic device may display the user interface 63 shown in FIG. 6C, and the user interface 63 may include a schedule creation window 631. The schedule creation window 631 is used to display schedule information identified based on a text extracted from the interface.

For example, the schedule creation window 631 includes an exit control 631a, a create control 631b, schedule information 631c, a schedule attribute bar 631d, and a schedule theme bar 631f.

The exit control 631a is used to exit from creating a schedule. The create control 631b is used to create a schedule based on the schedule information of the schedule creation window 631. The schedule information 631c is used to display the schedule information identified based on the text extracted from the interface, for example, "Discuss academic matters with Teacher Xu, December 20 14:00, Main building 205 of xx University". The schedule attribute bar 631d is used to display the schedule attribute identified based on the text extracted from the interface, such as "Default". The schedule theme bar 631f is used to display the theme information "Discuss academic matters with Teacher Xu" identified based on the screenshot. It should be understood that the "December 20" in the schedule information 631c is time information obtained through inference based on the time information such as "Friday" that is identified from the text extracted from the interface.

In this application, the user may modify the schedule information based on the control in the schedule creation window 631. For example, the user may edit the schedule theme by using the smear control in the schedule theme bar 631f. If the user taps the smear control in the schedule theme bar 631f, the electronic device may display the smear area shown in FIG. 1F for selection by the user. This is not limited in this application.

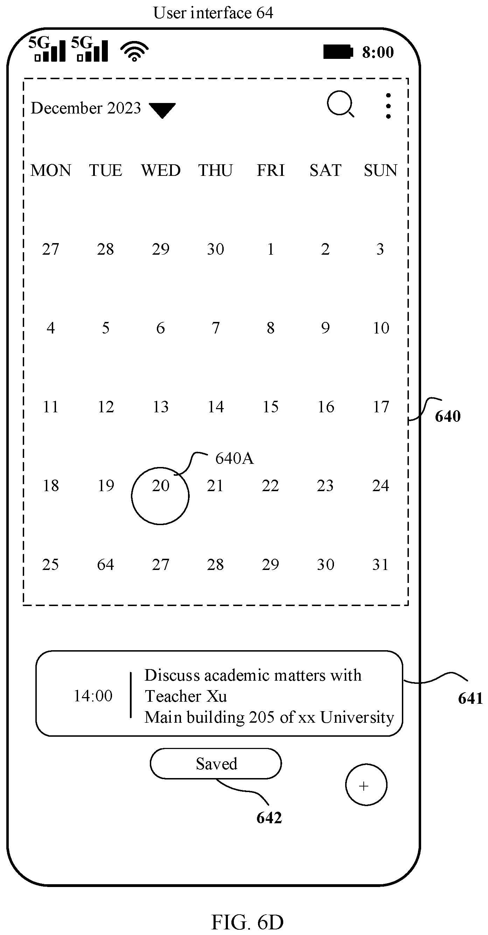

As shown in FIG. 6C, when detecting a user operation on the create control 631b, the electronic device may create a schedule based on current schedule information in the schedule creation window 631 in response to the user operation, and display a user interface 64 shown in FIG. 6D.

The user interface 64 may include calendar information 640, schedule information 641, and a notification window 642. The calendar information 640 includes a date 640A in a selected state, and the date in the selected state is a schedule time in a schedule creation window 631. The schedule information 641 is used to display thumbnail information of a schedule corresponding to a schedule creation window. The notification window 642 is used to remind the user that the created schedule has been saved. Optionally, display of the notification window 642 may be cancelled after the notification window is displayed for preset duration.

It should be understood that a size, a location, and the like of the schedule creation window 631 are not limited in this application. For another option and a window feature of the schedule creation window 631, refer to related descriptions of the schedule creation window 241. Details are not described herein again.

It should be noted that, the foregoing FIG. 6A to FIG. 6D are described by using an example of pressing a screen with two fingers. In this application, the user may alternatively send, by using the smart transfer service, the foregoing plurality of rounds of dialogs to an application (for example, a system calendar) that creates a schedule through importing, to create a schedule. For example, the user may touch and hold the user interface 61 until the electronic device displays the plurality of rounds of dialogs in the user interface 61 as a floating window. Then, in response to the drag operation performed by the user through touching and holding without releasing a finger, the electronic device displays an application icon corresponding to the smart transfer service, including a schedule creation icon (for example, a schedule creation icon 231a). Then, in response to a user operation of dragging to the schedule creation icon, the electronic device displays the schedule creation window (for example, the schedule creation window 351). For a detailed process, refer to the foregoing related content of the smart transfer service.

In this embodiment of this application, when the to-be-processed data includes a plurality of rounds of dialogs, the electronic device may perform context inference on the to-be-processed data to determine schedule information in the to-be-processed data. In the method, the user does not need to extract schedule information from the dialog content, so that the schedule information can be intelligently identified, thereby simplifying a schedule creation time and improving user experience.

In some embodiments of this application, after identifying a location from the to-be-processed data, the electronic device may obtain a recommended location based on the identified location and related address information of the user; and display the recommended location. The related address information of the user may be a location (for example, a location frequently navigated) frequently visited by the user.

For example, the user may enable a permission of obtaining an address in a system calendar, and the system calendar may store an address that the user has visited. Then, after the location is identified from the to-be-processed data, matching may be performed between the identified location (for example, a kindergarten) and the stored address. If a central kindergarten meets a matching principle, the central kindergarten may be displayed as a recommended location.

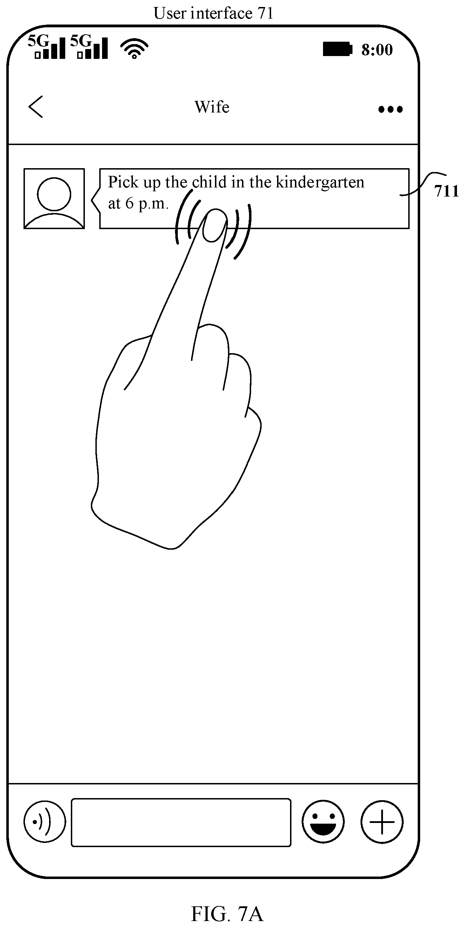

For example, the following describes the "location recommendation" function of the electronic device with reference to FIG. 7A to FIG. 7G.

FIG. 7A shows an application interface of a chat application according to an embodiment of this application. A user interface 71 shown in FIG. 7A includes chat information 711.

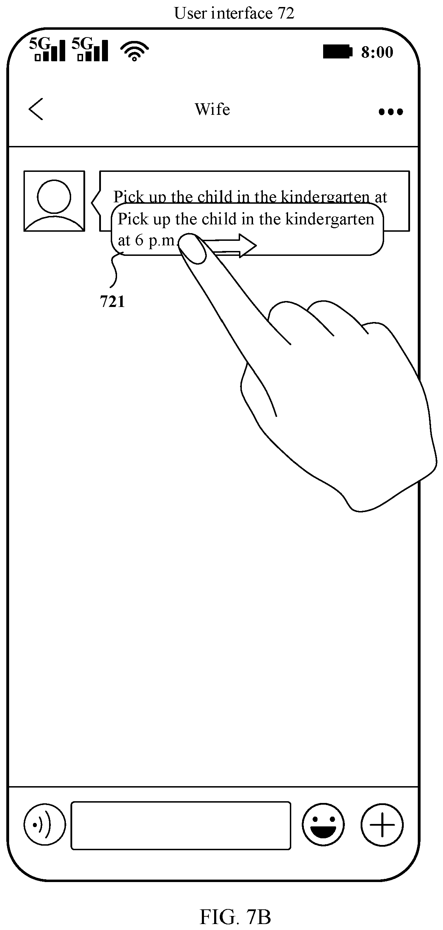

In a process of displaying the chat information 711, the electronic device may detect whether there is a user operation performed on the chat information 711. Referring to FIG. 7A, the electronic device may detect a touch and hold operation performed on the chat information 711. In response to the foregoing user operation, the electronic device may switch the chat information 711 to a floating state. For example, the electronic device may display a user interface 72 shown in FIG. 7B, where the user interface 72 may include a floating window 721, and the floating window 721 is used to display the chat information 711. A display position of the floating window 721 may be adjusted in real time by following a moving track of a touch operation of the user, that is, the display position of the floating window 721 is adjusted.

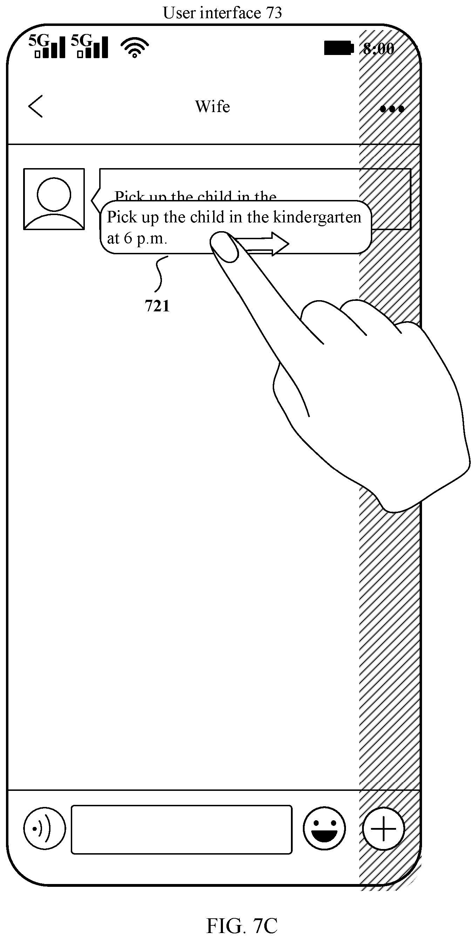

As shown in FIG. 7B, the electronic device may detect an operation of dragging, by the user, the floating window 721 to slide toward a right side of the screen. After detecting that the floating window 721 is approaching the right side of the screen, the electronic device may display a visual indication of light strip. As shown in FIG. 7C, the user interface 73 includes the floating window 721 and a visual indication of light strip 731. The visual indication of light strip 731 may be used to prompt the user that the floating window 721 has approached the right side of the screen. In this case, the user may determine to continue sliding rightward to trigger a service corresponding to the right side of the screen, or determine to stop sliding rightward to avoid triggering the service corresponding to the right side of the screen.

In this embodiment of this application, the service corresponding to the right side of the screen may be the smart transfer service. If the smart transfer is triggered, the electronic device may display, on the right side of the screen, a menu bar that includes one or more candidate application icons. A candidate application is an application that is selected by the electronic device from all installed applications and that is capable of receiving the to-be-processed data.

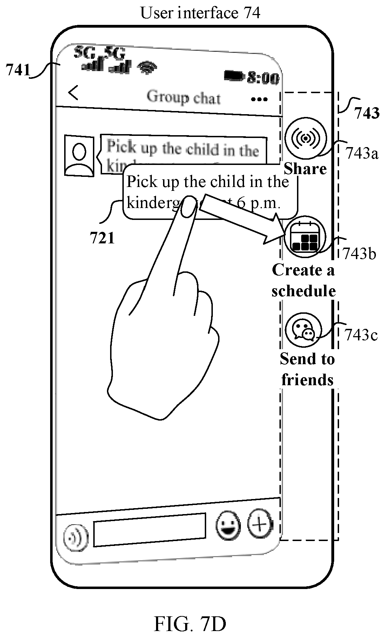

As shown in FIG. 7C, the electronic device may detect the user operation of continuing sliding rightward. In response to the foregoing operation, the electronic device may trigger the smart transfer service, and display the menu bar that includes one or more candidate application icons. For example, the electronic device may display a user interface 74 shown in FIG. 7D. Referring to FIG. 7D, the electronic device may display a menu bar 743 on the right side of the screen. The menu bar 743 includes a plurality of application icons. As shown in FIG. 7D, the menu bar 743 may display a share icon 743a, a schedule creation icon 743b, a message icon 743c, and the like. One icon corresponds to one application. All of applications corresponding to the foregoing icons are applications (candidate applications) capable of receiving the chat information 711 in the floating window 721. It may be understood that, when there are many candidate applications and not all of the candidate applications can be displayed in the menu bar 743 at the same time, the electronic device may further update, based on the drag operation of the user, candidate application icons currently displayed in the menu bar 743.

In addition, the original user interface may be adjusted to a right perspective image (for example, an image 741 shown in FIG. 7D), which forms an animation effect of "door opening" with the menu bar 743, thereby enhancing user experience. In an implementation, after "door opening", an image displayed on the left side is a user interface captured by the electronic device at a triggering moment. In other words, after "door opening", in a process of selecting the target application by the user, the image on the left side is fixed and does not change over time. In some other embodiments, the electronic device may alternatively display a user interface of an original application in real time after "door opening". In this case, after "door opening", the image on the left side changes over time in the process of selecting the target application by the user.

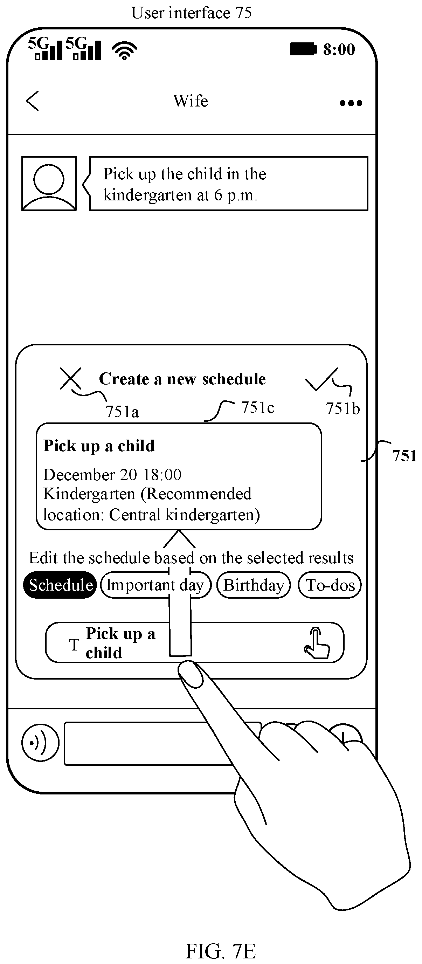

As shown in FIG. 7D, the user may drag the floating window 721 to the area in which the target application icon (for example, the schedule creation icon 743b) is located. The electronic device may identify schedule information in chat information 711 in the floating window 721 in response to the user operation of dragging the floating window 721 to the schedule creation icon and releasing the floating window, and display a schedule creation window, where the schedule creation window may include a plurality of pieces of identified schedule information. For example, the electronic device may display a user interface 75 shown in FIG. 7E, where the user interface 75 may include a schedule creation window 751.

For example, the schedule creation window 751 may include an exit control 751a, a create control 751b, and schedule information 751c. The exit control 751a is used to exit from creating a schedule. The create control 751b is used to create a schedule based on content of the schedule creation window 751. The schedule information 751c is used to display information obtained based on the chat information 711, such as "Pick up a child, December 20 18:00, kindergarten and central kindergarten". The "central kindergarten" is a recommended location obtained based on the "kindergarten" in the chat information 711 in combination with the related address information of the user. In this application, the "kindergarten" in the chat information 711 may be referred to as first location information, the "central kindergarten" may also be referred to as second location information, and the schedule creation window 751 may also be referred to as a first window.

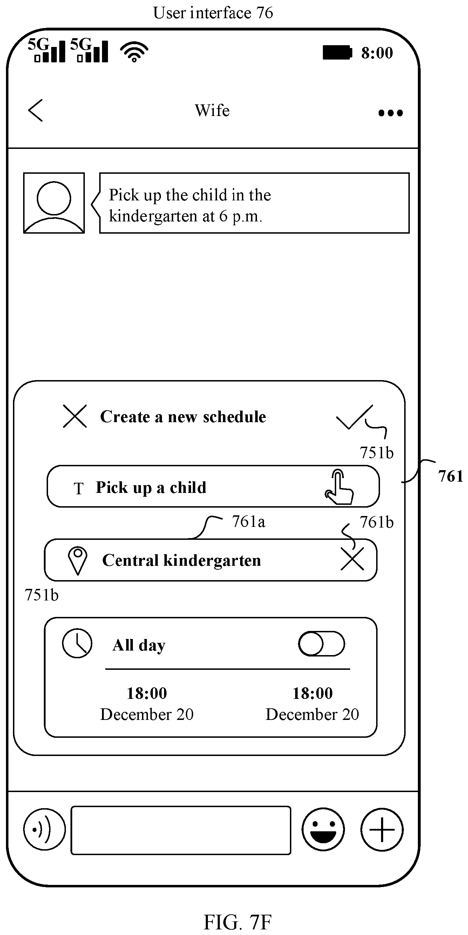

As shown in FIG. 7E, the user may perform an upward sliding operation in the schedule creation window 751. Correspondingly, the electronic device may display the hidden schedule setting option in response to the user operation. For example, the electronic device may display a user interface 76 shown in FIG. 7F, and the user interface 76 may include an originally hidden schedule setting option, such as a location bar 761a.

The location bar 761a may include a cancel control 761b, where the cancel control 761b is used to delete a current location, and the location bar 761a is used to input a location.

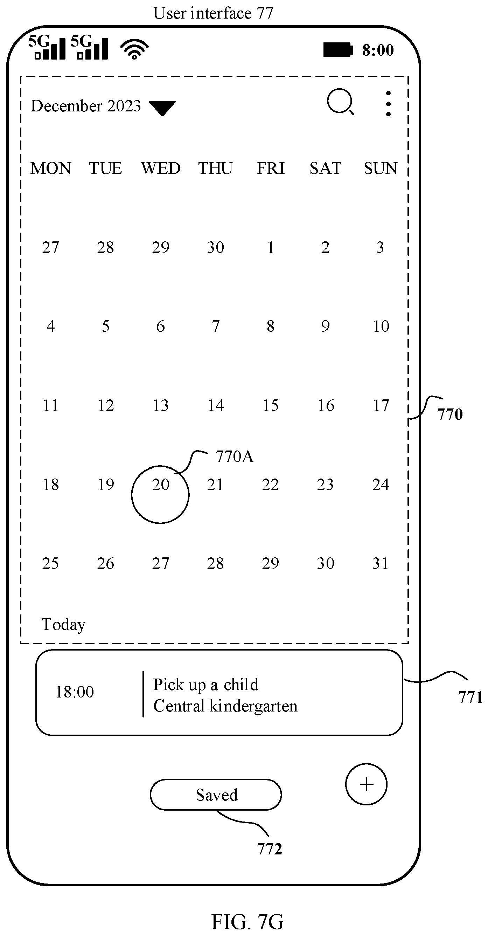

In some embodiments, the user may touch the create control 751b in the user interface 75 shown in FIG. 7E or in the user interface 76 shown in FIG. 7F. Correspondingly, the electronic device may create a schedule based on current schedule information in the schedule creation window, and display a user interface 77 shown in FIG. 7G.

The user interface 77 may include calendar information 770, schedule information 771, and a notification window 772. The calendar information 770 includes a date 770A in a selected state, and the date in the selected state is a schedule time (that is, December 20) in a schedule creation window 751. The schedule information 771 is used to display thumbnail information of a schedule corresponding to a schedule creation window. The notification window 772 is used to remind the user that the created schedule has been saved. Optionally, display of the notification window 772 may be cancelled after the notification window is displayed for preset duration. In this application, the user interface 77 may be referred to as a fifth interface of the first application (for example, a system calendar), and the schedule information 771 may also be referred to as thumbnail information of the first schedule.

It should be understood that an application (for example, the foregoing ticket purchase application or the chat application) in this application may be a system application, or may be a third-party application. In this embodiment of this application, the system application is an application that is directly provided by an operating system of the electronic device and that is used to implement a specific function. The third-party application is an application that is obtained by the electronic device over the Internet, that is provided by another developer, and that is used to implement a specific function.

In this embodiment of this application, after identifying a location from the to-be-processed data, the electronic device may obtain a recommended location based on the identified location and related address information of the user; and display the recommended location. In the method, intelligent recommendation of a location may be implemented without requiring the user to personally supplement schedule information, thereby simplifying a schedule creation time and improving user experience.

In some embodiments of this application, the electronic device may send to-be-processed data (for example, an image and a text selected by a user) to a server, and the server identifies schedule information based on the to-be-processed data. Then, the server sends the identified schedule information (for example, a schedule theme, a location, and a time) to the electronic device. The electronic device displays the foregoing schedule information.

In a possible implementation, the server may identify schedule information in the to-be-processed data through deep learning. It should be noted that, in another embodiment of this application, the schedule information in the to-be-processed data may alternatively be identified by the electronic device. This is not limited in this application.

For example, the server may train a neural network based on training data, so that the trained neural network (for ease of description, briefly referred to as a target neural network) has a capability of identifying a schedule theme, a location, and a time.

For example, when the to-be-processed data includes a text within a time identification range, the target neural network may identify a date, a time, and a priority from the text. The identified date may include specific information about a year, a month, a week, and a day. The identified time may include a time point or a time period. The priority is used to indicate a degree of importance of the schedule, such as important and ordinary. Table 1 shows an example of a text within the time identification range and date information that can be identified by the text. For example, when the text within the time identification range of the to-be-processed data includes a relative year (for example, "next year"), if the current year is 2023, specific information of the year identified by the target neural network based on "next year" may be "2024". For another example, when the text within the time identification range in the to-be-processed data includes a degree word (for example, "quite") or an important word (for example, "urgent"), the target neural network may identify that a priority of the schedule is "important".

Optionally, the target neural network may further set the priority of the schedule to be important when a time is about to arrive. For example, in the foregoing embodiments shown in FIG. 7A to FIG. 7G, because a time point "6:00 p.m." is relatively close to a current time, the target neural network may set the priority of the schedule to be important.

**Table 1**

| Schedule setting item | Classification | Time identification range |
|---|---|---|
| Date | Year | 1. Relative year: This year, next year, the year after next, X years later; |
| | | 2. Accurate year: X year |
| | Month | 1. Relative month: This month, next month, X months later, end of next month, beginning of next month, middle of next month, end of X month, beginning of X month, month and middle of X month; |
| | | 2. Accurate month: X month |
| | Week | 1. Accurate week: Week X, week X, next week X, next week X, and week X; |
| | | 2. Relative week: Next week X |
| | Day | 1. Relative date: Today, tomorrow, the day after tomorrow, the day after the day after tomorrow, X days later, X workdays later; |
| | | 2. Festival: Common festivals: |
| | | 3. Lunar calendar: 1st to 9th day |
| | | 4. Solar term |
| Time | Time point | 1. Blur: Morning, morning, morning, noon, afternoon, evening, evening, morning; |
| | | 2. Commuter: After work or before work; |
| | | 3. Relative time: X minutes later, X hours later, X minutes later, X hours later; |
| | | 4. Accurate time: X o'clock X minutes, X:X time + range identifier + time |
| | Time period | Time + range identifier + time |
| | | 1. Text: To, to; |
| | | 2. Symbol: - ~ |
| Priority | Priority | Degree word + important word |
| | | 1. Degree word: very, very, extremely, most, quite; |
| | | 2. Important word: Key, important, urgent, essential, critical |

For example, Table 2 shows an example of a theme classification rule of training data for training a target neural network. If the target neural network fails to identify a specific classification in the definition of the theme classification based on the to-be-processed data, a theme of level-2 classification is identified based on the to-be-processed data, and the theme of the level-2 classification is used as an identified theme. Optionally, the target neural network may further identify a theme of level-1 classification based on the to-be-processed data. The theme of the level-1 classification is used for theme recommendation. For example, when the target neural network fails to identify, from the to-be-processed data, a specific classification in the definition of the theme classification and content of the theme of the level-2 classification, the level-1 classification corresponding to the to-be-processed data may be identified, and the recommended theme is displayed in the theme bar. For example, the level-1 classification is displayed in the schedule theme bar 153 in FIG. 1E.

**Table 2**

| Level-1 classification | Level-2 classification | Definition of theme classification |
|---|---|---|
| Work | Meeting | / |
| Travel | Train | / |
| | Airplane | / |
| | Hotel | / |
| | Ship | / |
| | Bus | / |
| Exercise | Exercise | Basketball, football, swimming, running... |
| Dining | Dining | Meal, restaurant... |
| Leisure | Movie | / |
| Others | Hospital reservation | / |
| | Administrative office | / |
| Special schedule | Birthday | / |
| | Important day | Anniversary: marriage, love, crediting, graduation, proposal; Important: admission/enrollment, examination, competition |
| Education and training | Education and training | 1. Go to school, attend classes and training courses; |
| | | 2. Dance class and Taekwondo class (with courses, which are classified as education and training) |

For example, the chat information displayed by the electronic device includes "Meeting at 2:00 p.m., important". The user selects the chat information as to-be-processed data. For example, the user touches and holds the chat information until the chat information is in a floating state, and then drags the chat information to a schedule creation icon, or touches and holds the chat information until a share control is displayed, and then taps to share the chat information to the schedule creation icon. Then, the electronic device may identify schedule information in the to-be-processed data by using the target neural network. When identifying that the schedule information includes the blurred time point "2:00 p.m.", if the current day is December 20, 2023, the electronic device may determine, based on the foregoing Table 1 and the blurred time point, that the time is "December 20, 2023 16:00". When identifying that the schedule information includes "important", the electronic device may set a priority of the schedule to be important based on Table 1. When identifying that the schedule information includes "meeting", the electronic device may determine that the schedule theme is the "meeting" in the foregoing Table 2.

**Next, software and hardware architectures and a form of the electronic device provided in the embodiments of this application are introduced.**

The electronic device may be a portable terminal device equipped with iOS^{®}, Android^{®}, Microsoft^{®}, or another operating system, for example, a mobile phone, a tablet computer, a home screen computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device.

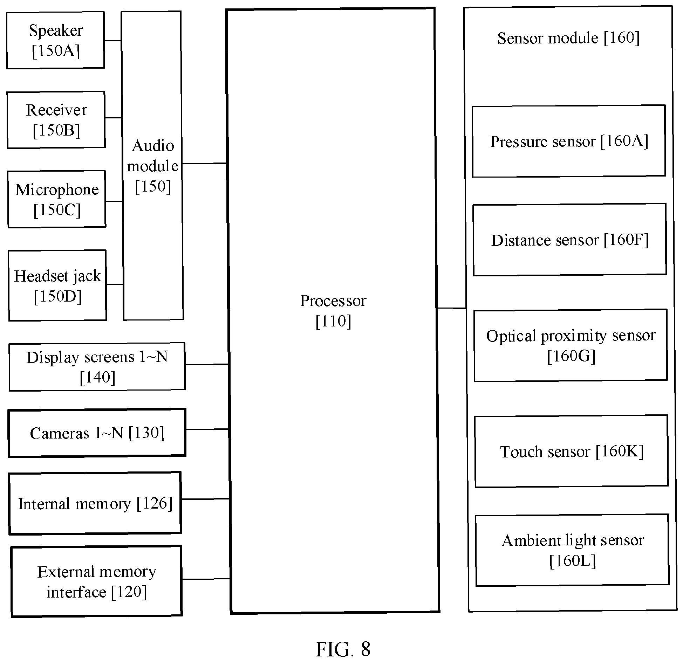

**FIG. 8** **shows an example of a hardware structure of an electronic device according to an embodiment of this application.** As shown in FIG. 8, the electronic device 100 may include a processor 110, an external memory interface 120, an internal memory 126, a camera 130, a display screen 140, an audio module 150, a speaker 150A, a receiver 150B, a microphone 150C, a headset jack 150D, and a sensor module 160. The sensor module 160 may include a pressure sensor 160A, a distance sensor 160F, an optical proximity sensor 160G, a touch sensor 160K, an ambient light sensor 160L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The internal memory 126 may include one or more random access memories (random access memory, RAM) and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a fifth generation DDR SDRAM is usually referred to as a DDR5 SDRAM), and the like.

The non-volatile memory may include a magnetic disk storage device and a flash memory (flash memory).

The flash memory may include NOR FLASH, NAND FLASH, 3D NAND FLASH, and the like based on an operating principle. The flash memory may include a single-level cell (single-level cell, SLC), a multi-level cell (multi-level cell, MLC), a triple-level cell (triple-level cell, TLC), a quad-level cell (quad-level cell, QLC), and the like based on a quantity of levels of a cell. The flash memory may include a universal flash storage (English: universal flash storage, UFS), an embedded multi media card (embedded multi media Card, eMMC), and the like based on a storage specification.

The processor 110 may directly perform reading from or writing into the random access memory. The random access memory may be configured to store an executable program (for example, machine instructions) of an operating system or another running program, and may be further configured to store data of a user and data of an application, and the like.

The non-volatile memory may alternatively store the executable program, the data of the user, and the data of the application, and the like, which may be loaded into the random access memory in advance for directly reading and writing by the processor 110.

The external memory interface 120 may be configured to connect to an external non-volatile memory, to expand a storage capability of the electronic device. The external non-volatile memory communicates with the processor 110 by using the external memory interface 120, to implement a data storage function. For example, files such as music and a video are stored in the external non-volatile memory.

The electronic device implements a display function by using the GPU, the display screen 140, the application processor, and the like. The GPU is a microprocessor for image processing, and is connected to the display screen 140 and the application processor. The GPU is configured to perform mathematical and geometric computing for graphics rendering. The processor 110 may include one or more GPUs that execute program instructions to generate or change display information.

The display screen 140 is configured to display an image, a video, or the like. The display screen 140 includes a display panel. The display panel may be a liquid crystal display (liquid crystal display, LCD). The display panel may alternatively be made from an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a miniled, a microLed, a micro-oled, a quantum dot light emitting diode (quantum dot light emitting diodes, QLED), or the like. In some embodiments, the electronic device may include 1 or N display screens 140, where N is a positive integer greater than 1.

The electronic device may implement a shooting function by using the ISP, the camera 130, the video codec, the GPU, the display screen 140, the application processor, and the like.

The ISP is configured to process data fed back by the camera 130. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise and brightness of the image. The ISP may further optimize parameters such as exposure and a color temperature of a shooting scenario. In some embodiments, the ISP may be disposed in the camera 130.

The camera 130 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include 1 or N cameras 130, where N is a positive integer greater than 1.

In this embodiment of this application, the camera 130 may be a telephoto camera, a main camera, a wide-angle camera, or the like.

The digital signal processor is configured to process a digital signal, and may further process another digital signal in addition to the digital image signal. For example, when the electronic device performs frequency selection, the digital signal processor is configured to perform Fourier transform or the like on frequency energy.

The video codec is configured to compress or decompress a digital video. The electronic device may support one or more video codecs. In this way, the electronic device can play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device, for example, image recognition, face recognition, speech recognition, and text understanding, may be implemented by using the NPU.

The electronic device may implement an audio function by using the audio module 150, the speaker 150A, the receiver 150B, the microphone 150C, the headset jack 150D, the application processor, and the like. For example, music playing and sound recording are implemented.

The audio module 150 is configured to convert digital audio information into an analog audio signal for output, and is also configured to convert analog audio input into a digital audio signal. The audio module 150 may be further configured to encode and decode the audio signal. In some embodiments, the audio module 150 may be disposed in the processor 110 or some functional modules of the audio module 150 may be disposed in the processor 110.

The speaker 150A, also referred to as a "loudspeaker", is configured to convert an audio electrical signal into a sound signal. The electronic device may be used to listen to music or answer a call in a hands-free mode by using the speaker 150A.

The receiver 150B, also referred to as an "earpiece", is configured to convert an audio electrical signal into a sound signal. When the electronic device is used to answer a call or receive a voice message, the receiver 150B may be placed close to a human ear to receive a voice.

The microphone 150C, also referred to as a "mic" or "mike", is configured to convert a sound signal into an electrical signal. When making a call or sending a voice message, the user may make a sound by approaching the mouth to the microphone 150C, to input a sound signal to the microphone 150C. At least one microphone 150C may be disposed in the electronic device. In some other embodiments, two microphones 150C may be disposed in the electronic device, to implement a noise reduction function in addition to sound signal collection. In some other embodiments, three, four, or more microphones 150C may be alternatively disposed in the electronic device, to implement sound signal collection and noise reduction, and further identify a sound source and implement a directional recording function and the like.

The headset jack 150D is configured to connect to a wired headset. The headset jack 150D may be the USB interface, or may be a 3.5 mm open mobile electronic device platform (open mobile terminal platform, OMTP) standard interface or a cellular telecommunications industry association of the USA (cellular telecommunications industry association of the USA, CTIA) standard interface.

The structure illustrated in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware. For example, the electronic device may further include a key, a motor, an indicator, and a subscriber identification module (subscriber identification module, SIM) card interface. For another example, the sensor module may further include a gyroscope sensor, a barometric pressure sensor, a magnetic sensor, an acceleration sensor, a fingerprint sensor, a temperature sensor, a bone conduction sensor, and the like.

In this embodiment of this application, the electronic device may execute, by using the processor 110, the schedule creation method provided in this application, and display, by using the display screen 140, schedule information obtained by executing the schedule creation method provided in this application.

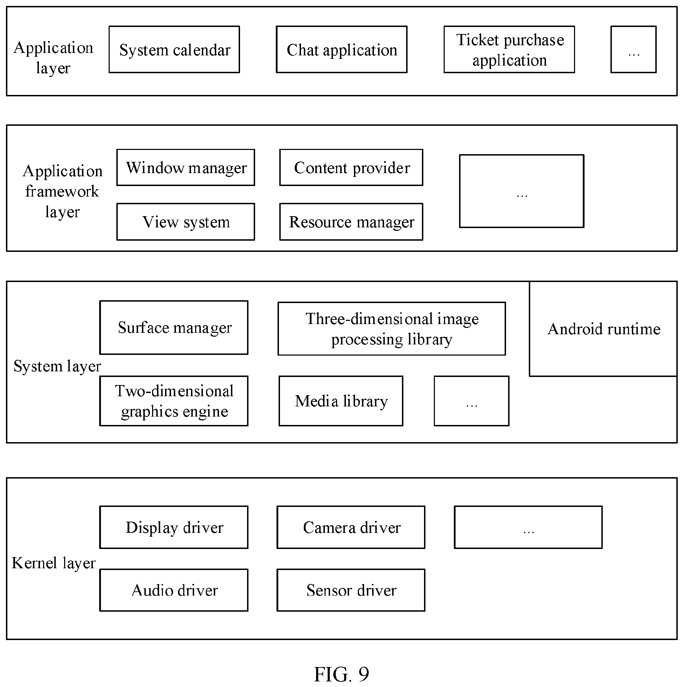

**FIG. 9** **shows an example of a software architecture of an electronic device according to an embodiment of this application.**

As shown in FIG. 9, a layered architecture divides a system into several layers, and each layer has a clear role and task. Layers communicate with each other through a software interface. In some embodiments, a system is divided into four layers: an application layer, an application framework layer (framework), a system layer, and a kernel layer from top to bottom.

The application layer (application) may include a series of application packages. For example, the application package may include applications such as a system calendar, a chat application, and a ticket purchase application.

The application framework layer (framework) serves as a bridge, so that the application framework layer can interact with the application through an application programming interface (application program interface, API) and interact with a HAL by using a HAL interface definition language (HAL interface definition language, HIDL).

The software architecture may further include a hardware abstract layer (hardware abstract layer, HAL) that is not shown in FIG. 9, and the hardware abstract layer is an interface layer located between the application framework layer and the kernel layer, and provides a virtual hardware platform for an operating system.

The kernel layer is a layer between hardware and software. The kernel layer includes various hardware drivers, such as a display driver, a camera driver, an audio driver, and a sensor driver. The kernel layer may further include a digital signal processor driver (not shown), an image processor driver (not shown), and the like. The camera driver is configured to drive an image sensor of one or more cameras in a camera module to capture an image, and drive an image signal processor to preprocess the image. The digital signal processor driver is configured to drive a digital signal processor to process the image. The image processor driver is configured to drive a graphics processing unit to process the image.

A term "user interface (user interface, UI)" in the specification, claims, and accompanying drawings of this application is a medium interface for interaction and information exchange between an application or an operating system and a user, and the medium interface implements conversion between an internal form of information and a form acceptable to the user. A user interface of an application is source code written in a specific computer language such as java or an extensible markup language (extensible markup language, XML). The source code of the interface is parsed and rendered on an electronic device, and is finally presented as user-recognizable content, for example, a control such as a picture, a text, or a button. The control (control) is also referred to as a widget (widget), and is a basic element of the user interface. Typical controls include a toolbar (toolbar), a menu bar (menu bar), a text box (text box), a button (button), a scrollbar (scrollbar), a picture, and a text. An attribute and content of the control in the interface are defined by using a label or a node. For example, the control included in the interface is defined in the XML by using a node such as <Textview>, <ImgView>, or <VideoView>. One node corresponds to one control or attribute in the interface. After being parsed and rendered, the node is presented as user-visible content. In addition, interfaces of many applications, such as a hybrid application (hybrid application), usually further include a web page. The web page, also referred to as a page, may be understood as a special control embedded in an application interface. The web page is source code written in a specific computer language, for example, a hyper text markup language (hyper text markup language, HTML), a cascading style sheet (cascading style sheets, CSS), or a javascript (JavaScript, JS). The source code of the web page may be loaded and displayed as user-recognizable content by a browser or a web page display component with a function similar to that of the browser. Specific content included in the web page is also defined by using a label or a node in the source code of the web page. For example, an element and an attribute of the web page are defined in the HTML by using <p>, <img>, <video>, and <canvas>.

The user interface is usually in a representation form of a graphical user interface (graphic user interface, GUI), and the graphical user interface is a user interface that is related to a computer operation and that is displayed in a graphical manner. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, and a Widget.

It should be understood that the steps of the foregoing method embodiment provided in this application may be implemented by using a hardware integrated logic circuit in the processor or implemented by using instructions in a software form. The steps of the method disclosed with reference to the embodiments of this application may be directly performed by a hardware processor, or by a combination of hardware in the processor and a software module.

This application further provides an electronic device, and the electronic device may include a memory and a processor. The memory may be configured to store a computer program, and the processor may be configured to invoke the computer program in the memory to enable the electronic device to perform the method in any one of the foregoing embodiments.

This application further provides a chip system. The chip system includes at least one processor configured to implement the functions in the method performed by the electronic device in any one of the foregoing embodiments. In a possible design, the chip system further includes a memory. The memory is configured to store program instructions and data. The memory is located inside the processor or outside the processor. The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may alternatively include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be respectively arranged on different chips. A type of the memory and a manner of disposing the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product, and the computer program product includes a computer program (which may also be referred to as code or instructions). When the computer program is run, a computer is enabled to perform the method performed by the electronic device in any one of the foregoing embodiments.

This application further provides a computer-readable storage medium. The computer-readable storage medium stores a computer program (also referred to as code or instructions). When the computer program is run, a computer is enabled to perform the method performed by the electronic device in any one of the foregoing embodiments.

The various implementations of this application may be arbitrarily combined to achieve different technical effects.

All or some of the foregoing embodiments may be implemented by using software, hardware, firmware, or any combination thereof. When the software is used for implementation, some or all of the embodiments may be implemented in a form of a computer program product. A computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any available medium accessible by a computer, or include one or more data storage devices such as a server or a data center integrating an available medium. The usable medium may be a magnetic medium (for example, a floppy disk, a hard disk, or a magnetic tape), an optical medium (for example, a DVD), a semiconductor medium (for example, a solid state disk Solid State Disk), or the like.

Persons of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are only embodiments of the technical solutions of the present invention, and are not intended to limit the protection scope of the present invention. Any modifications, equivalent replacements, improvements, or the like made based on the disclosure of the present invention shall fall within the protection scope of the present invention.

## Claims

1. A schedule creation method, applied to an electronic device, wherein the method comprises:
detecting a first operation of dragging a first control into a first area on a screen, wherein the first control corresponds to first data, and the first data comprises first schedule information;
displaying a first icon of a first application in response to the first operation;
detecting a second operation of continuing to drag the first control into a second area in which the first icon is located and releasing the first control; and
displaying a first window of the first application in response to the second operation, wherein the first window comprises second schedule information, and the second schedule information corresponds to the first schedule information.

2. The method according to claim 1, wherein the method further comprises:
displaying a first interface, wherein the first interface comprises the first schedule information;
detecting a screenshot operation when the first interface is displayed; and
displaying the first control in the first interface in response to the screenshot operation, wherein the first data is a screenshot image of the first interface.

3. The method according to claim 2, wherein a preview of the screenshot image of the first interface is displayed in the first control.

4. The method according to claim 1, wherein the method further comprises:
displaying a second interface of a second application, wherein the second interface comprises a first area, first text information is displayed in the first area, and the first text information comprises the first schedule information;
detecting a touch and hold operation on the first area when the second interface is displayed; and
displaying the first control in the first interface in response to the touch and hold operation on the first area, wherein the first data is the first text information.

5. The method according to claim 1, wherein the method further comprises:
displaying a third interface of a third application, wherein the third interface comprises a plurality of dialog boxes;
detecting a touch and hold operation on the third interface when the third interface is displayed; and
displaying the first control in the third interface in response to the touch and hold operation on the third interface, wherein the first data is content of the plurality of dialog boxes.

6. The method according to claim 1, wherein the method further comprises:
displaying a fourth interface of a gallery application, wherein the fourth interface comprises a first image;
detecting a touch and hold operation on the first image when the fourth interface is displayed; and
displaying the first control in the fourth interface in response to the touch and hold operation on the first image, wherein the first data is the first image.

7. The method according to any one of claims 1-6, wherein the first schedule information and the second schedule information correspond to a same schedule.

8. The method according to claim 7, wherein the first window further comprises a second control, and the method further comprises:
displaying a fifth interface of the first application in response to a user operation on the second control, wherein the fifth interface comprises thumbnail information of the first schedule, and the first schedule is created by the first application based on the first schedule information.

9. The method according to any one of claims 1-6, wherein the first schedule information comprises schedule information of a second schedule and schedule information of a third schedule; and the first window comprises a second area and a third area, the second area comprises the schedule information of the second schedule, and the third area comprises the schedule information of the third schedule.

10. The method according to claim 9, wherein the second area is in a selected state, the first window further comprises the second control, and the method further comprises:
displaying a sixth interface of the first application in response to a user operation on the second control, wherein the sixth interface comprises thumbnail information of the second schedule.

11. The method according to claim 9, wherein the second area is in a selected state, the first window further comprises the second control, and the method further comprises:
displaying the third area in a selected state in response to a user operation on the third area; and
displaying a seventh interface of the first application in response to a user operation on the second control, wherein the seventh interface comprises thumbnail information of the second schedule and thumbnail information of the third schedule.

12. The method according to any one of claims 1-11, wherein the first data comprises first location information, the first window comprises second location information, and the first location information is different from the second location information.

13. The method according to any one of claims 1-12, wherein the first data is the first image, and the method further comprises:
displaying the first image and a share control;
displaying the first icon in response to a user operation on the share control; and
displaying the first window in response to a user operation on the first icon.

14. The method according to any one of claims 1-13, wherein the method further comprises:
displaying an eighth interface of a fourth application, wherein the eighth interface comprises the first schedule information;
displaying a third control in response to a user operation performed on the eighth interface when the eighth interface is displayed; and
displaying the first window in response to a user operation on the third control.

15. The method according to any one of claims 1-14, wherein the first schedule information comprises at least one of a theme, a time, and a location of a schedule.

16. A schedule creation method, applied to an electronic device, wherein the method comprises:
displaying a first interface of a first application, wherein the first interface comprises calendar information and a first control;
displaying a second interface of the first application in response to a user operation performed on the first control, wherein the second interface comprises a first input bar and a second control; and the first input bar is in a blank state;
displaying a third interface of a second application in response to a user operation performed on the second control, wherein the third interface comprises a first preview corresponding to a first image, and the first image comprises first schedule information; and
displaying a fourth interface of the first application in response to an operation on the first preview, wherein the fourth interface comprises the first input bar, the first input bar comprises second schedule information, and the second schedule information corresponds to the first schedule information.

17. The method according to claim 16, wherein the first schedule information and the second schedule information correspond to a same schedule.

18. The method according to claim 17, wherein the first schedule information is schedule information corresponding to a first schedule, the fourth interface further comprises the second control, and the method further comprises:
displaying a fifth interface of the first application in response to a user operation on the second control, wherein the fifth interface comprises thumbnail information of the first schedule.

19. The method according to claim 16, wherein the first schedule information comprises schedule information of a second schedule and schedule information of a third schedule; and the first window comprises a second area and a third area, the second area comprises the schedule information of the second schedule, and the third area comprises the schedule information of the third schedule.

20. The method according to claim 19, wherein the second area is in a selected state, the first window further comprises the second control, and the method further comprises:
displaying a sixth interface of the first application in response to the user operation on the second control, wherein the sixth interface comprises thumbnail information of the second schedule.

21. The method according to claim 19, wherein the second area is in a selected state, the first window further comprises the second control, and the method further comprises:
displaying the third area in a selected state in response to a user operation on the third area; and
displaying a seventh interface of the first application in response to the user operation on the second control, wherein the seventh interface comprises thumbnail information of the first schedule and thumbnail information of the second schedule.

22. The method according to any one of claims 16-21, wherein the first schedule information comprises at least one of a theme, a time, and a location of a schedule.

23. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1-22.

24. A computer-readable storage medium, comprising instructions, wherein when the instructions are run on an electronic device, the electronic device is enabled to perform the method according to any one of claims 1-22.
